# EUROPEAN PATENT SPECIFICATION

(11) **EP 3 113 542 B1**
(45) Date of publication and mention of the grant of the patent: **11.04.2018**
(21) Application number: 15193317.3
(22) Date of filing: 17.01.2008
(51) Int. Cl.: H04W 28/26, H04L 12/54, H04L 12/911

(54) **METHOD, APPARATUS AND SYSTEM FOR SHARING NETWORK RESOURCES**
VERFAHREN, VORRICHTUNG UND SYSTEM ZUR GEMEINSAMEN NUTZUNG VON NETZWERKRESSOURCEN
PROCÉDÉ, APPAREIL ET SYSTÈME DE PARTAGE DE RESSOURCES DE RÉSEAU

(30) Priority: 18.01.2007 CN 200710003628; 19.06.2007 CN 200710127626
(43) Date of publication of application: 04.01.2017
(62) Divisional of application: 08700786.0
(73) Proprietor: Huawei Technologies Co., Ltd., Longgang District Shenzhen, Guangdong 518129 (CN)
(72) Inventor: Zhi, Chunxia, Shenzhen (CN); Zhang, Jian, Shenzhen (CN); Hu, Huadong, Shenzhen (CN); Yin, Yu, Shenzhen (CN); Liu, Lan, Shenzhen (CN)
(74) Representative: Kreuz, Georg Maria

(56) References cited:
- "3rd Generation Partnership Project; Technical Specification Group Services and System Aspects; 3GPP System Architecture Evolution: Report on Technical Options and Conclusions (Release 7)", 3GPP STANDARD; 3GPP TR 23.882, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.6.1, 1 November 2006 (2006-11-01), pages 1-171, XP050364117,

## Description

### Field of the Invention

The present invention relates to mobile communication technologies, and in particular, to a method, apparatus and system for sharing network resources.

### Background of the Invention

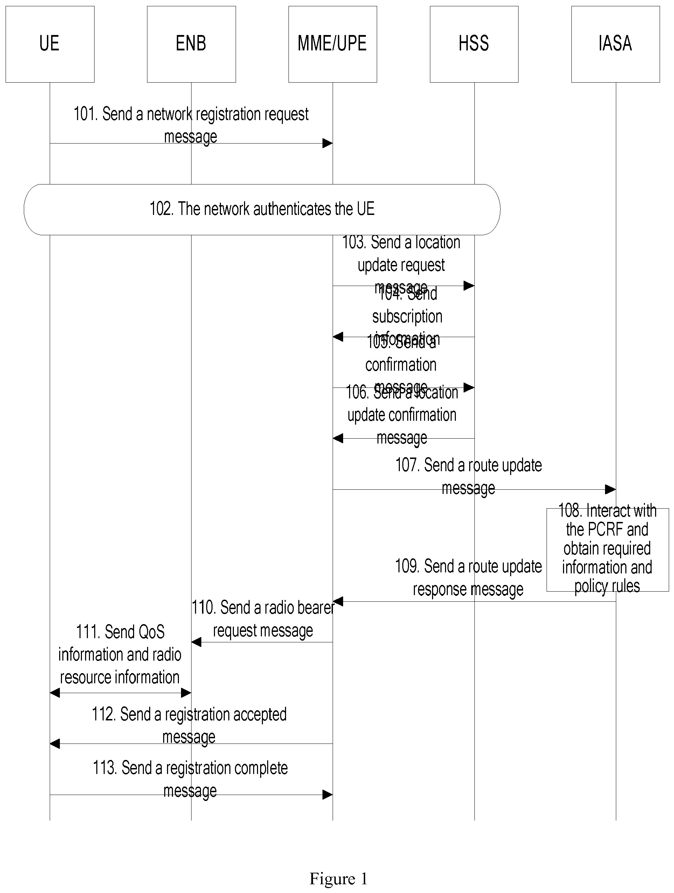

Figure 1 is a flowchart of network registration during the initial access of a User Equipment, UE, in an evolved network, including the following steps:
Step 101: The UE sends a network registration request message to a Mobility Management Entity/User Plane Entity, MME/UPE.
Step 102: The network authenticates the UE.
Step 103: The MME/UPE sends a location update request message to a Home Subscriber Server, HSS.
Step 104: The HSS sends the subscription information of the UE to the MME/UPE.
Step 105: The MME/UPE saves the subscription information of the UE and sends a confirmation message to the HSS.
Step 106: The HSS sends a location update confirmation message to the MME/UPE.
Step 107: The MME/UPE sends a route update message to an Inter Access System Anchor, IASA and requests the Quality of Service, QoS, information required for bearer setup.
Step 108: The IASA interacts with a Policy and Charging Rule Function, PCRF and obtains relevant information and policy rules required for bearer setup.
Step 109: The IASA sends a location update response message to the MME/UPE.
Step 110: The MME/UPE sends a radio bearer request message to an Evolved NodeB, ENB, carrying QoS information and Radio Resource Control, RRC, information to the ENB.
Step 111: The ENB sends QoS information and network resource information to the UE through the RRC connection. This step is optional.
Step 112: The MME/UPE sends a registration accepted message to the UE.
Step 113: The UE sends a registration complete message to the MME/UPE. The registration process ends.

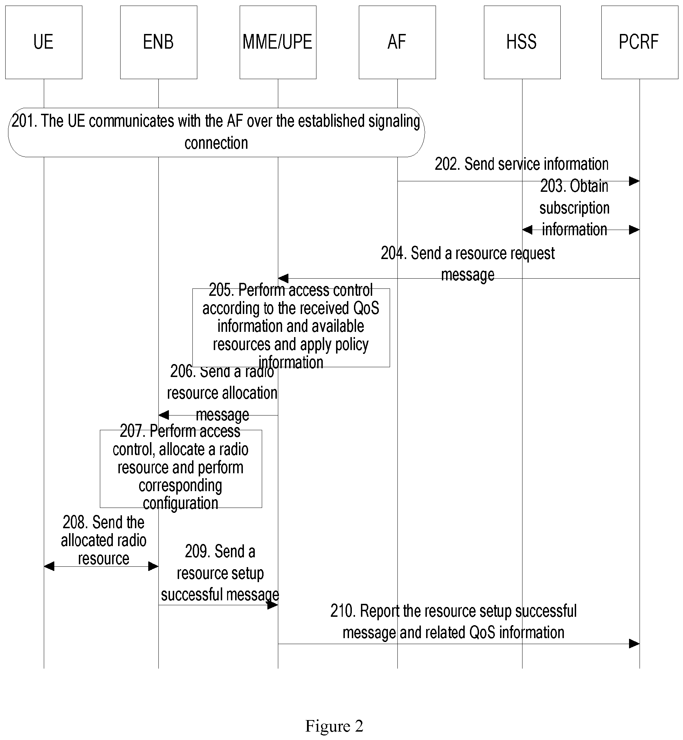

Figure 2 shows the bearer setup process when the UE completes the network registration and needs to set up a bearer. As shown in Figure 2, the bearer setup process includes the following steps:
Step 201: The UE and an Application Function, AF, perform service negotiation on an established signaling connection.
Step 202: The AF sends service information to the PCRF. The service information carries the service type and information related to the requested service.
Step 203: The PCRF obtains the subscription information of the UE from the HSS.
Step 204: The PCRF sends a resource request message to the MME/UPE. The message carries information such as the label of the service type corresponding to the current bearer, policies related to the requested service and QoS.
Step 205: The MME/UPE checks the subscription information of the UE, performs access control according to the received QoS information and available resources, and applies the received policy information.
Step 206: The MME/UPE sends a radio resource allocation message to the ENB. The message includes the label of the service type corresponding to the current bearer and maximum available network resource.
Step 207: The ENB performs access control and converts the received QoS information into the required radio QoS information, based on which the ENB allocates a network resource and performs corresponding configuration.
Step 208: The ENB provides required radio configuration information to the UE, and sets up network resource information related to IP or session data flows.
Step 209: The ENB sends a resource setup successful message to the MME/UPE.
Step 210: The MME/UPE reports the resource setup successful message and related QoS information.

In the flowchart shown in Figure 2, the PCRF in step 203 may also obtain the user's subscription information from a Subscription Profile Repository, SPR, because the SPR may also store the user's subscription information. The HSS and the SPR are two completely independent functional entities, but may be located on the same network node.

Here, the ENB is an option of the Long Term Evolution-Radio Access Network, LTE-RAN, functions. According to actual conditions, the ENB network element may also be replaced by other options of the LTE-RAN functions.

In the related art, once the ENB sets up a bearer for the service requested by the UE, the service occupies the network resource allocated by the ENB all the time. When the service only requires part of the allocated network resource, the excess part may not be used by other services.

Document 3GPP TR 23.882 V1.6.1 (2006-1-11) in section 7.12 discloses the description of key issue policy control and charging. Specifically, the document discloses QoS concept and the QoS profile of the SAE bearer, and the bit rate per SAE bearer.

### Summary of the Invention

The invention is defined in the independent claims. Further preferred embodiments are defined in the dependent claims.

An example of the present invention provides a method for sharing network resources, which can implement the sharing of network resources. The method for sharing network resources includes: determining a sharing group for a bearer and a maximum network resource of the sharing group during the bearer setup process; and allocating a resource for the bearer in the range of the maximum network resource of the sharing group.

An example of the present invention also provides an apparatus for sharing network resources, which may implement the sharing of network resources. The apparatus for sharing network resources includes: a sharing group determining unit, adapted to determine a sharing group for a bearer during the bearer setup process;a resource determining unit, adapted to determine a corresponding maximum network resource according to the sharing group determined by the sharing group determining unit; and a resource allocating unit, adapted to allocate a network resource for the established bearer in the range of the maximum network resource of the sharing group.

An example of the present invention provides a method for sharing network resources, which may implement the sharing of network resources. The method for sharing network resources includes: determining, a maximum network resource corresponding to a User Equipment, UE, on a Packet Data Network, PDN, or a PDN set, when the UE sets up a bearer with the PDN or the PDN set; and allocating, by a PDN gateway connecting the UE and the PDN or the PDN set and by an Evolved NodeB, ENB, corresponding to the UE, a resource for the bearer in the range of the maximum network resource according to the determined maximum network resource. An embodiment of the present invention provides a system for sharing network resources, which may implement the sharing of network resources. The system for sharing network resources includes at least a UE, an ENB, a PDN gateway, and a PDN or PDN set. When the UE connected to the PDN gateway sets up a bearer with the PDN or PDN set, the PDN gateway obtains a preset maximum network resource corresponding to the UE on the current PDN or PDN set, and allocates a resource for the current bearer in the range of the maximum network resource; and when the UE connected to the ENB sets up a bearer, the ENB obtains a preset maximum network resource corresponding to the UE on the current PDN or PDN set, and allocates a resource for the current bearer in the range of the maximum network resource.

Another example of the present invention provides a PDN gateway, which may implement the sharing of network resources. The PDN gateway includes an obtaining unit and an allocating unit. When a UE connected to the PDN gateway sets up a bearer with a PDN or PDN set, the obtaining unit obtains a preset maximum network resource corresponding to the UE on the PDN or PDN set, and sends the maximum network resource to the allocating unit. The allocating unit receives the maximum network resource and allocates a resource for the current bearer in the range of the maximum network resource.

An example of the present invention provides an ENB, which may implement the sharing of network resources. The ENB includes an obtaining unit and a allocating unit. When a UE connected to the ENB sets up a bearer with a PDN or PDN set, the obtaining unit obtains a preset maximum network resource corresponding to the UE on the PDN or PDN set, and sends the maximum network resource to the allocating unit. The allocating unit receives the maximum network resource and allocates a resource for the current bearer in the range of the maximum network resource.

Embodiments of the present invention implement sharing of a maximum network resource among multiple bearers, solve the problem of low network resource utilization caused by the fact that each bearer occupies a fixed bandwidth resource, and implement maximum utilization of the network resource.

### Brief Description of the Drawings

Figure 1 is a flowchart of network registration in the related art;
Figure 2 is a flowchart of bearer setup in the related art;
Figure 3 is an exemplary flowchart of a method according to the first technical scheme of the present invention;
Figure 4 is an exemplary structural diagram of an apparatus according to the first technical scheme of the present invention;
Figure 5 is a flowchart of storing the correspondence among the three according to the first embodiment of the present invention;
Figure 6 is a flowchart of a method according to the first embodiment of the present invention;
Figure 7 is a structural diagram of an apparatus according to the first embodiment of the present invention;
Figure 8 is a flowchart of establishing and storing the correspondence among the three according to the second embodiment of the present invention;
Figure 9 is a flowchart of establishing and storing the correspondence among the three according to the third embodiment of the present invention;
Figure 10 is a structural diagram of an apparatus according to the third embodiment of the present invention;
Figure 11 is a flowchart of establishing and storing the correspondence between the identifier of the sharing group and the AMBR according to the fourth embodiment of the present invention;
Figure 12 is a flowchart of a method according to the fourth embodiment of the present invention;
Figure 13 is a structural diagram of an apparatus according to the fourth embodiment of the present invention;
Figure 14 is a flowchart of storing the correspondence between the identifier of the sharing group and the AMBR according to the fifth embodiment of the present invention;
Figure 15 is a structural diagram of an apparatus according to the fifth embodiment of the present invention;
Figure 16 is a flowchart of storing the correspondence between the identifier of the sharing group and the AMBR according to the sixth embodiment of the present invention;
Figure 17 is a flowchart of a method according to the sixth embodiment of the present invention;
Figure 18 is a structural diagram of an apparatus according to the sixth embodiment of the present invention;
Figure 19 is a flowchart of storing the correspondence between the identifier of the sharing group and the AMBR according to the seventh embodiment of the present invention;
Figure 20 is a structural diagram of an apparatus according to the seventh embodiment of the present invention;
Figure 21 is an exemplary flowchart of a method according to the second technical scheme of the present invention;
Figure 22 is a structural diagram of a system according to the second technical scheme of the present invention;
Figure 23 is an exemplary flowchart of a method based on the PCC architecture according to an embodiment of the present invention;
Figure 24 is a flowchart of a method according to the eighth embodiment of the present invention;
Figure 25 is a flowchart of a method according to the ninth embodiment of the present invention;
Figure 26 is a flowchart of a method according to the tenth embodiment of the present invention;
Figure 27 is a flowchart of setting up a non-first bearer according to an embodiment of the present invention;
Figure 28 is a structural diagram of a system according to the second technical scheme of the present invention;
Figure 29 is a flowchart of a method according to the eleventh embodiment of the present invention;
Figure 30 is a flowchart of a method according to the twelfth embodiment of the invention;
Figure 31 is another flowchart of setting up a non-first bearer according to an embodiment of the present invention;
Figure 32 is a structural diagram of another system according to the second technical scheme of the present invention;
Figure 33 is a structural diagram of another system according to the second technical scheme of the present invention;
Figure 34 is a structural diagram of a PDN gateway according to the second technical scheme of the present invention; and
Figure 35 is a structural diagram of an ENB according to the second technical scheme of the present invention.

### Detailed Description of the Invention

The present invention is hereinafter described in detail with reference to embodiments and accompanying drawings.

According to the technical schemes of the embodiments of the present invention, multiple bearers share one maximum network resource and resources are allocated for multiple bearers in the range of the maximum network resource. Thus, the sharing of the same maximum network resource is implemented among multiple bearers.

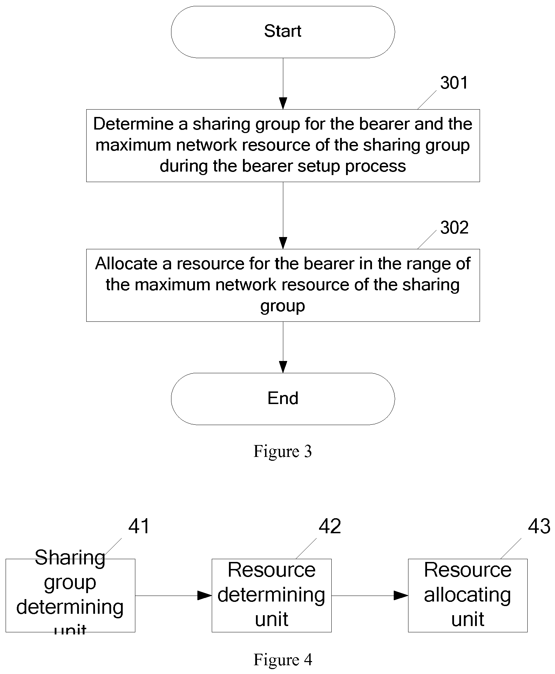

Figure 3 is an exemplary flowchart of a method according to the first technical scheme of the present invention. In Figure 3, the method includes the following steps: in step 301, determining a sharing group for a bearer and the maximum network resource of the sharing group in the bearer setup process; in step 302, allocating a resource for the bearer in the range of the maximum network resource of the sharing group.

Figure 4 is an exemplary flowchart of an apparatus according to the first technical scheme of the present invention. In Figure 4, the apparatus includes: a sharing group determining unit 41, a resource determining unit 42 and a resource allocating unit 43. The sharing group determining unit 41 is adapted to determine a sharing group for a bearer during the bearer setup process; the resource determining unit 42 is adapted to determine a corresponding maximum network resource according to the sharing group determined by the sharing group determining unit 41; and the resource allocating unit 43 is adapted to allocate a network resource for the established bearer in the range of the maximum network resource of the sharing group. Allocating resources for multiple bearers in the same sharing group may be implemented according to the related art.

In the embodiments of the present invention, the sharing group can be set according to the service type corresponding to the current bearer. Then the maximum network resource is determined according to the service type corresponding to the sharing group and the total of network resources. The service type may be a service category or a service class. In the embodiments, labels, especially labels determined by the PCRF according to the service type corresponding to the bearer, may be used to identify service types.

A sharing group may correspond to multiple labels, that is, multiple service types, or correspond to only one label, that is, one service type. But a sharing group can correspond to only one maximum network resource. When a sharing group has only one bearer, the bearer may occupy the resource of the whole sharing group, that is, the maximum network resource. When a bearer is added to the sharing group, the network does not need to transfer resource information for the added bearer. The ENB just needs to allocate a maximum network resource dynamically for the bearers of the sharing group according to a certain resource allocation mechanism, thus implementing maximum utilization of network resources. The maximum network resource may be the Aggregate Maximum Bit Rate, AMBR, or Maximum Bit Rate, MBR, or Guaranteed Bit Rate, GBR. The sharing group may be set for individual UEs, or for multiple or all UEs.

In the wireless communication system, the ENB usually allocates a network resource during the bearer setup process. Therefore, to achieve the purposes of embodiments of the present invention, the ENB needs to know the sharing group corresponding to the current bearer and allocate a network resource for the bearer in the range of the maximum network resource of the sharing group. Generally, the subscription information related to users is stored in the HSS or SPR. Therefore, to let the ENB know the sharing group corresponding to the bearer, the ENB should be able to obtain the information related to the sharing group from the HSS or SPR.

The ENB may store the correspondence among the label, the sharing group identifier and the maximum network resource of the sharing group. Therefore, the ENB, through the label obtained by the PCRF and the correspondence among the three parties, determines the sharing group corresponding to the bearer and the maximum network resource, and allocates a network resource for the bearer in the range of the maximum network resource. The ENB may also store the correspondence between the sharing identifier and the maximum network resource of the sharing group. Therefore, the ENB determines the maximum network resource of the sharing group corresponding to the bearer by obtaining the sharing identifier through other network elements.

It can be seen through the preceding analysis that the determination of sharing groups corresponding to bears and the maximum network resource of sharing groups can be completed in the same network element or in different network elements.

In embodiments of the present invention, the maximum network resource is an AMBR and the service type is identified by a label. The AMBR value can be determined by operators.

In the first, second and third embodiments, the ENB stores the correspondence among the label, the sharing group identifier and the AMBR of the sharing group and determines the sharing group and the AMBR of the sharing group. The difference among the three embodiments lies in that the correspondence among the label, the sharing group identifier and the AMBR of the sharing group is established on the ENB with different methods.

In the fourth and fifth embodiments, the ENB stores the correspondence between the sharing group identifier and the AMBR of the sharing group. The PCRF determines the sharing group and the ENB determines the AMBR of the sharing group. The difference between the two embodiments lies in that the correspondence between the sharing group identifier and the AMBR of the sharing group is established on the ENB with different methods.

In the sixth and seventh embodiments, the ENB stores the correspondence between the sharing group identifier and the AMBR of the sharing group. The MME/UPE determines the sharing group and the ENB determines the AMBR of the sharing group. The difference between the two embodiments lies in that the correspondence between the sharing group identifier and the AMBR of the sharing group is established on the MME/UPE with different methods.

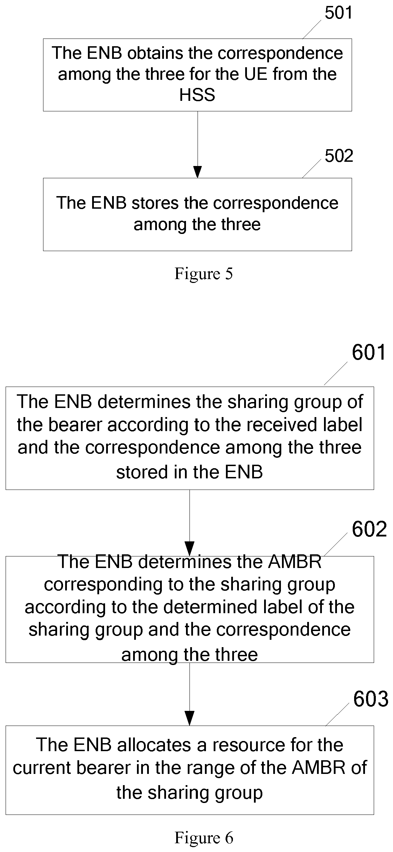

Figure 5 is a flowchart of storing the correspondence among the three according to the first embodiment of the present invention.

In the embodiment, the correspondence among the label, the sharing group identifier and the AMBR of the sharing group is configured on the HSS of the UE. The sharing group identifier represents the sharing group. For easy description, the correspondence among the label, the sharing group identifier and the AMBR of the sharing group is hereinafter referred to as the correspondence among the three. Table 1 shows the correspondence among the three:

**Table 1**

| Sharing Group Identifier | Label Value Contained in Sharing Group | AMBR Value of Sharing Group |
|---|---|---|
| Group 1 | Label 1 | AMBR1 |
| | Label 2 | |
| Group 2 | Label 3 | AMBR2 |
| | Label 4 | |
| Group 3 | Label 5 | AMBR3 |
| | Label 6 | |

The process of storing the correspondence among the three on the ENB includes:
Step 501: When the UE sets up a first bearer, the ENB obtains the correspondence among the three from the HSS.

The correspondence among the three may be obtained from the HSS of the UE and sent to the ENB by the MME/UPE or by steps triggered by other network elements, such as PCRF or HSS. In the following embodiments of the present invention, the correspondence of the UE is obtained by the MME/UPE from the HSS.

Step 502: The ENB stores the correspondence among the three.

When the UE sets up a first bearer in network registration of the UE during power-on, that is, the UE sets up the bearer when performing the process shown in Figure 1, step 501 corresponds to steps 104 and 110 in Figure 1. That is, when the HSS sends subscription information of the current UE to the MME/UPE, the subscription information carries the correspondence among the three. A message unit, namely, a related table, is added to the radio bearer request message that the MME/UPE sends to the ENB. The message unit is used to send the correspondence among the three to the ENB.

According to the method shown in Figure 5, when a UE sets up a first bearer, the MME/UPE assists the ENB in storing the correspondence among the three. When the UE sets up other bearers, the ENB does not need to store the correspondence among the three, but directly uses the stored correspondence among the three.

After the UE sets up the first bearer, the ENB determines the sharing group and the AMBR of the sharing group according to the stored label, the sharing group identifier and the AMBR, and allocates a resource in the range of the AMBR of the sharing group. In the correspondence among the three, a default sharing group and a corresponding AMBR can be set and used when the UE sets up a first bearer or other bearers which are not matched to sharing groups.

Figure 6 is a flowchart of a method according to the first embodiment of the present invention. In the method for sharing network resources, the ENB determines the sharing group of the current bearer and the AMBR of the sharing group. And the ENB stores the correspondence among the three of the current UE. The flowchart shown in Figure 6 is as follows:
Step 601: The ENB receives the label sent by the PCRF and determines the sharing group of the bearer according to the received label and the correspondence among the three stored in the ENB during the bearer setup process.

In this embodiment, if the UE sets up a non-first bearer during bearer setup process, the ENB has stored the correspondence among the three of the UE.

Step 602: The ENB determines the AMBR of the sharing group according to the sharing group identifier and the correspondence among the three stored in the ENB.

Step 603: The ENB allocates a resource for the current bearer in the range of the AMBR of the sharing group.

The label received by the ENB is sent by the PCRF through the MME/UPE after the PCRF determines the label corresponding to the current bearer. Therefore, step 603 corresponding to steps 204 to 206 in Figure 2.

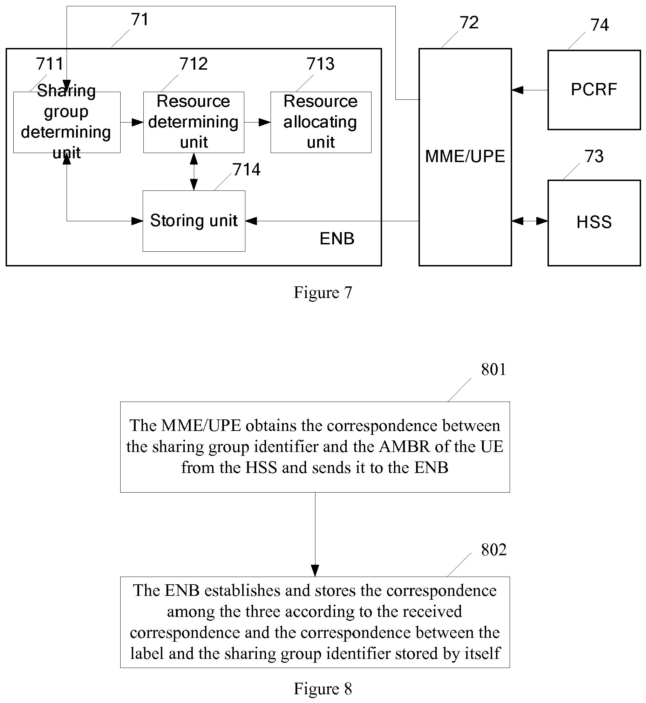

Figure 7 is a structural diagram of an apparatus according to the first embodiment of the present invention. The apparatus is located in an ENB 71. The ENB 71 includes at least: a sharing group determining unit 711, adapted to determine a sharing group for a bearer during the bearer setup process according to the service type corresponding to the bearer; a resource determining unit 712, adapted to determine an AMBR according to the sharing group determined by the sharing group determining unit 711; and a resource allocating unit 713, adapted to allocate a network resource for the established bearer in the range of the AMBR of the sharing group.

To establish the correspondence among the three on the ENB 71, the apparatus includes at least: an HSS 73, adapted to store the correspondence among the three for the UE; and an MME/UPE 72, adapted to obtain the correspondence among the three for the UE and send to the ENB 71 when the UE sets up a first bearer. Accordingly, the ENB 71 further includes a storing unit 714 adapted to store the correspondence among the three, and determines the sharing group and the AMBR according to the correspondence stored in the storing unit 714.

The apparatus further includes a PCRF 74, adapted to determine the label corresponding to the current bearer and send the label to the sharing group determining unit 711. The PCRF 74 sends the label to the sharing group determining unit 711 through the MME/UPE. The sharing group determining unit 711 is adapted to determine the sharing group according to the received label and the correspondence stored by itself.

Figure 8 is a flowchart of establishing and storing the correspondence among the three according to the second embodiment of the present invention. In this embodiment, the HSS stores the correspondence between the sharing group identifier and the AMBR for the UE by using the method in Table 2. To store the correspondence between the label and the sharing group identifier, the ENB may use the method listed in Table 3.

**Table 2**

| Sharing Group Identifier | AMBR Value of Sharing Group |
|---|---|
| Group 1 | AMBR1 |
| Group 2 | AMBR2 |
| Group 3 | AMBR3 |

**Table 3**

| Sharing Group Identifier | Label Value Contained in Sharing Group |
|---|---|
| Group 1 | Label 1 |
| | Label 2 |
| Group 2 | Label 3 |
| | Label 4 |
| Group 3 | Label 5 |
| | Label 6 |

The process of establishing and storing the correspondence among the three on the ENB includes:
Step 801: When the UE sets up a first bearer, the MME/UPE obtains the correspondence between the sharing group identifier and the AMBR of the sharing group and sends to the ENB.
Step 802: The ENB stores the correspondence among the three for the UE according to the received correspondence between the sharing group identifier and the AMBR of the sharing group and the correspondence between the label and the sharing group identifier stored on the ENB.

When the first bearer is established in network registration of the UE upon power-on, that is, the bearer is established when the UE performs the process as shown in Figure 1, step 801 corresponds to steps 104 and 110 in Figure 1. For details, refer to the first embodiment.

The process of sharing network resources in the second embodiment of the present invention is the same as that in the first embodiment.

The structure of the apparatus in the second embodiment is the same as that of the apparatus in the first embodiment. But the methods for establishing the correspondence among the three are different, causing different connections among network elements. The functions and internal structure of the ENB in the second embodiment are the same as those in the first embodiment.

To establish the correspondence among the three, the HSS stores the correspondence between the sharing group identifier and the AMBR for the UE and sends the correspondence between the sharing group identifier and the AMBR for the UE to the ENB when the UE sets up a first bearer. Accordingly, the ENB further includes a storing unit adapted to store the correspondence between the label and the sharing group identifier, establishes the correspondence among the three according to the received correspondence and stores the correspondence to the storing unit. The ENB determines the sharing group and the AMBR according to the correspondence stored in the storing unit.

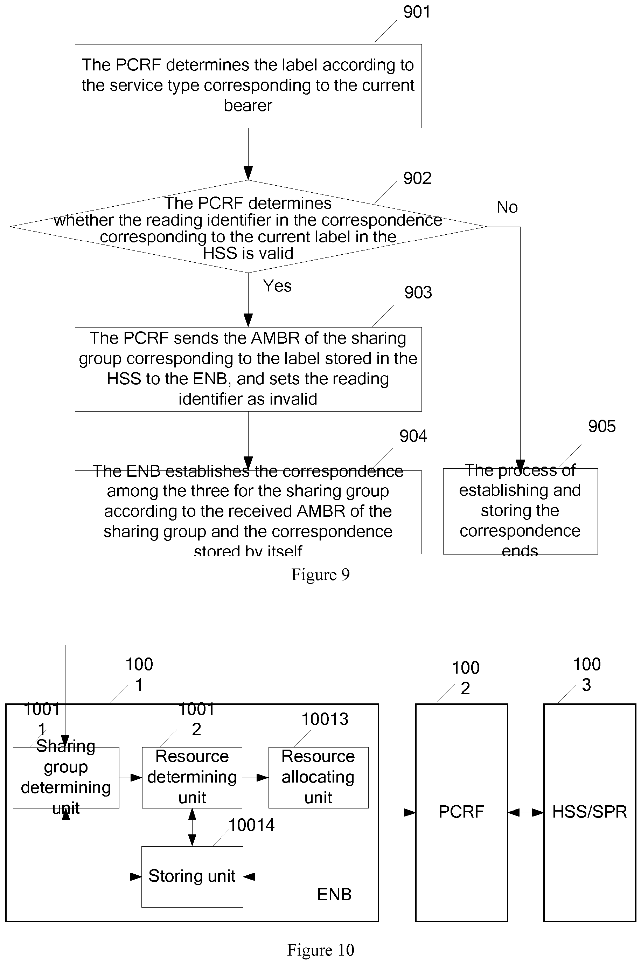

Figure 9 is a flowchart of establishing and storing the correspondence among the three according to the third embodiment of the present invention. The HSS stores the correspondence among the three and sets a reading identifier according to the correspondence, as shown in Table 4. The ENB stores the correspondence between the label and the sharing group identifier, as shown in Table 3.

**Table 4**

| Sharing Group Identifier | Label Value Contained in Sharing Group | AMBR Value of Sharing Group | Reading Identifier |
|---|---|---|---|
| Group 1 | Label 1 | AMBR1 | 0 |
| | Label 2 | | |
| Group 2 | Label 3 | AMBR2 | 0 |
| | Label 4 | | |
| Group 3 | Label 5 | AMBR3 | 0 |
| | Label 6 | | |

The process includes:
Step 901: The PCRF determines the label according to the service type corresponding to the current bearer during the bearer setup process.
Step 902: The PCRF determines whether the reading identifier in the correspondence of the current label in the HSS is valid. If valid, the process goes to step 903; if not, the process goes to step 905.

In the process, if the reading identifier is invalid, it indicates that the correspondence among the three has been established in the ENB.

Step 903: The PCRF sends the AMBR of the sharing group corresponding to the label stored in the HSS to the ENB, and sets the reading identifier as invalid. Steps 901 to 902 may be implemented when the PCRF obtains subscription information from the HSS in step 203 as shown in Figure 2. Anew message process may be defined for the process.

Step 904: The ENB establishes the correspondence among the three for the sharing group according to the received AMBR of the sharing group and the correspondence between the label and the sharing group identifier it stores. The process ends.

Step 905: The process of establishing and storing the correspondence ends. The PCRF sends the label to the ENB. The ENB determines the sharing group of the bearer and the AMBR of the sharing group according to the received label and the correspondence among the three stored.

The difference between processes of establishing the correspondence among the three shown in Figure 9 and Figure 5 and 8 lies in that the ENB establishes the correspondence among the three for the sharing group other than for users. Therefore, when a first bearer is established for a sharing group, the correspondence among the three is established on the ENB. When other bearers are established for the sharing group, the correspondence among the three already stored on the ENB can be used directly instead of being re-established and stored.

After the first bearer is established for the sharing group, the ENB determines how to allocate a network resource for the bearer of the sharing group according to the label of the sharing group, the sharing group identifier and the AMBR.

The process of sharing network resources in the third embodiment of the present invention is the same that in the first embodiment. But the bearer setup process is the process of setting up a non-first bearer for a sharing group.

In this embodiment, the HSS may be replaced by an SPR.

Figure 10 is a structural diagram of an apparatus according to the first embodiment of the present invention. The apparatus is located in an ENB 1001. The ENB 1001 includes at least: a sharing group determining unit 10011, a resource determining unit 10012 and a resource allocating unit 10013. The internal structure and connections of the ENB 1001 are the same as those described in the first embodiment.

To establish the correspondence among the three on the ENB 1001, the apparatus further includes: an HSS 1003 or SPR 1003, adapted to store the correspondence among the three and set a reading identifier for the correspondence; and a PCRF 1002, adapted to determine whether the reading identifier is valid during the bearer setup process after determining the label according to the service type corresponding to the current bearer, and if the reading identifier is valid, send the AMBR of the sharing group corresponding to the label stored in the HSS 1003 or SPR 1003 to the ENB 1001 and set the reading identifier as invalid.

Accordingly, the ENB 1001 further includes a storing unit 10014. The storing unit 10014 is adapted to store the correspondence between the label and the sharing group identifier and establish the correspondence among the three for the sharing group corresponding to the label according to the received AMBR of the sharing group and the correspondence stored by itself. The ENB 1001 determines the sharing group and the corresponding AMBR. The PCRF 1002 is adapted to determine the label corresponding to the current bearer and send the label to the sharing group determining unit 10011. The sharing group determining unit 10011 is adapted to determine the sharing group according to the received label and the correspondence stored by itself.

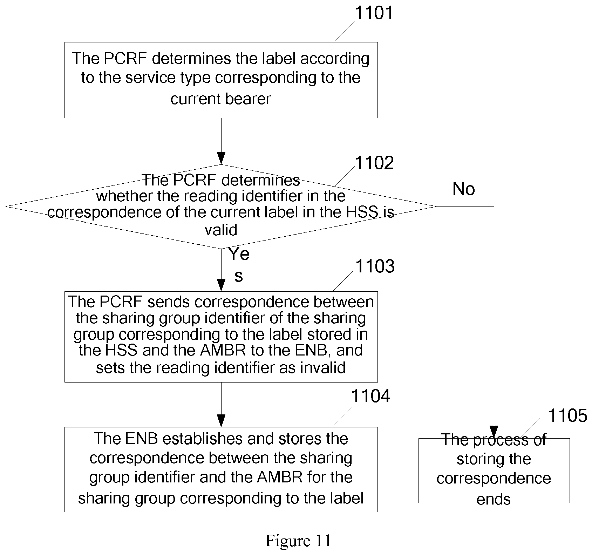

Figure 11 is a flowchart of establishing and storing the correspondence between the identifier of the sharing group and the AMBR according to the fourth embodiment of the present invention.

In this embodiment, the ENB stores the correspondence between the sharing group identifier and the AMBR. Other network elements obtain the sharing group identifier of the current bearer, determine the AMBR, and allocate a network resource for the bearer.

The HSS stores the correspondence among the three and sets a reading identifier for the correspondence. The correspondence may be expressed as shown in Table 4. The process of storing the correspondence between the sharing group identifier and the AMBR on the ENB includes:
Step 1101: The PCRF determines the label according to the service type corresponding to the current bearer during the bearer setup process.
Step 1102: The PCRF determines whether the reading identifier in the correspondence of the current label in the HSS is valid. If so, the process goes to step 1103; if not, the process goes to step 1105.

In the process, if the reading identifier is invalid, it indicates that the correspondence among the three has been established in the ENB.

Step 1103: The PCRF sends the sharing group identifier of the sharing group corresponding to the label stored in the HSS and the AMBR to the ENB, and sets the reading identifier as invalid. Steps 1101 to 1103 may be implemented when the PCRF obtains subscription information from the HSS in step 203 as shown in Figure 2. A new message process may be defined for the process.

Step 1104: The ENB stores the correspondence between the sharing group identifier and the AMBR based on the sharing group corresponding to the label. The process ends.

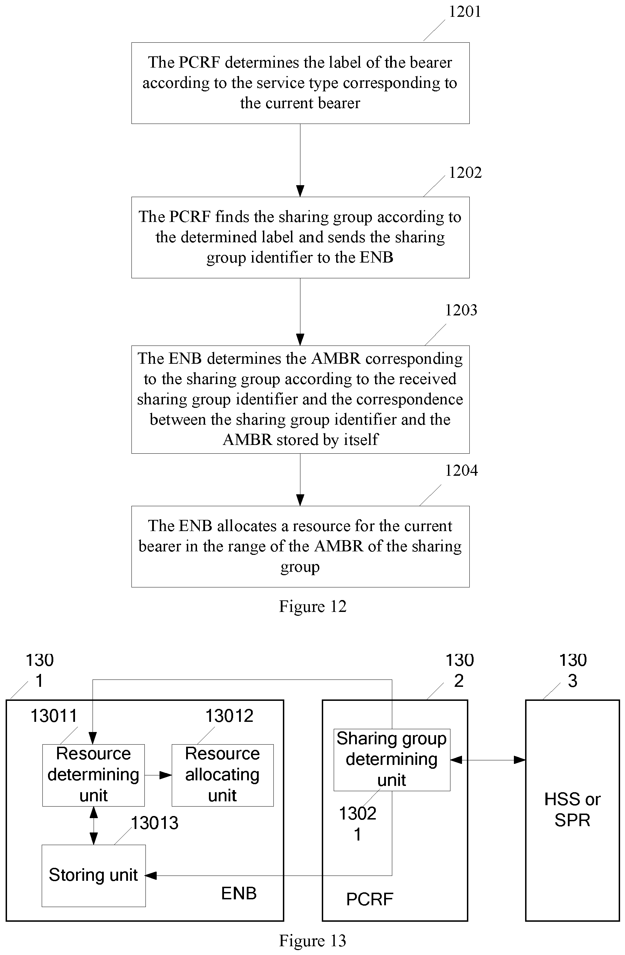

Step 1105: The process of storing the correspondence ends. The PCRF sends the sharing group identifier corresponding to the label to the ENB. The ENB determines the AMBR of the sharing group according to the received sharing group identifier and the correspondence between the sharing group identifier and the AMBR stored in the ENB, that is, performing the process as shown in Figure 12.

In the embodiment, the correspondence between the sharing group identifier and the AMBR is established on the ENB for the sharing group. Therefore, when a first bearer is established for the sharing group, the correspondence is established on the ENB. When other bearers are established for the sharing group, the correspondence already stored on the ENB can be used directly instead of being re-established.

After the first bearer is established for the sharing group, the ENB determines how to allocate a network resource in the sharing group according to the sharing group identifier and the AMBR.

Figure 12 is a flowchart of a method according to the fourth embodiment of the present invention. In the process, the PCRF determines the sharing group, and the ENB determines the AMBR. The detailed process is as follows:
Step 1201: The PCRF determines the label corresponding to the bearer according to the service type corresponding to the current bearer during the bearer setup process.
Step 1202: The PCRF obtains the sharing group identifier from the correspondence among the three stored in the HSS according to the determined label and sends the sharing group identifier to the ENB.
Steps 1201 and 1202 may be implemented via steps 203 to 206 as shown in Figure 2. In step 204, a message unit, namely, a group ID, may be added to the resource request message that the PCRF sends to the MME/UPE to send the sharing group ID. In step 206, a message unit, namely, a group ID, may be added to the resource allocation message that the MME/UPE sends to the ENB to send the sharing group ID.
Step 1203: The ENB determines the AMBR corresponding to the sharing group according to the received sharing group identifier and the correspondence between the sharing group identifier and the AMBR.
Step 1204: The ENB allocates a resource for the current bearer in the range of the AMBR of the sharing group.

In the flowcharts shown in Figure 11 and Figure 12, the HSS may be replaced by an SPR.

Figure 13 is a structural diagram of an apparatus according to the fourth embodiment of the present invention. The apparatus includes: a sharing group determining unit 13021, a resource determining unit 13011 and a resource allocating unit 13012. Connections among the preceding three units are the same as those shown in the structural diagram of the exemplary apparatus in the embodiments. But the sharing group determining unit is located in a PCRF 1302, while the resource determining unit 13011 and the resource allocating unit 13012 are located in an ENB 1301.

To establish the correspondence between the sharing group identifier and the AMBR on the ENB 1301, the apparatus further includes: an HSS 1303 or SPR 1303, adapted to store the correspondence among the three and set a reading identifier for the correspondence. The sharing group determining unit 13021 in the PCRF 1302 is further adapted to determine whether the reading identifier corresponding to the determined label is valid during the bearer setup process according to the correspondence stored in the HSS 1303 or SPR 1303 after the functional unit of the PCRF 1302 determines the label corresponding to the current bearer. When the reading identifier is valid, the sharing group determining unit sends the sharing group identifier corresponding to the label stored in the HSS 1303 or SPR 1303 and the AMBR to the resource determining unit 13011 in the ENB 1301, and sets the reading identifier in the HSS 1303 or SPR 1303 as invalid. The ENB 1301 further includes a storing unit 13013 which is adapted to store the correspondence between the sharing group identifier and the AMBR for the sharing group corresponding to the label according to the received correspondence.

Accordingly, the sharing group determining unit in the PCRF 1302 obtains the corresponding sharing group identifier when determining the sharing group of the bearer according to the determined label and the correspondence among the three in the HSS or SPR after the functional unit of the PCRF 1302 determines the label corresponding to the current bearer, and sends the sharing group identifier to the ENB 1301. The resource determining unit 13011 in the ENB 1301 determines the AMBR according to the received sharing group identifier and the correspondence between the sharing group identifier and the AMBR stored in the storing unit 13013.

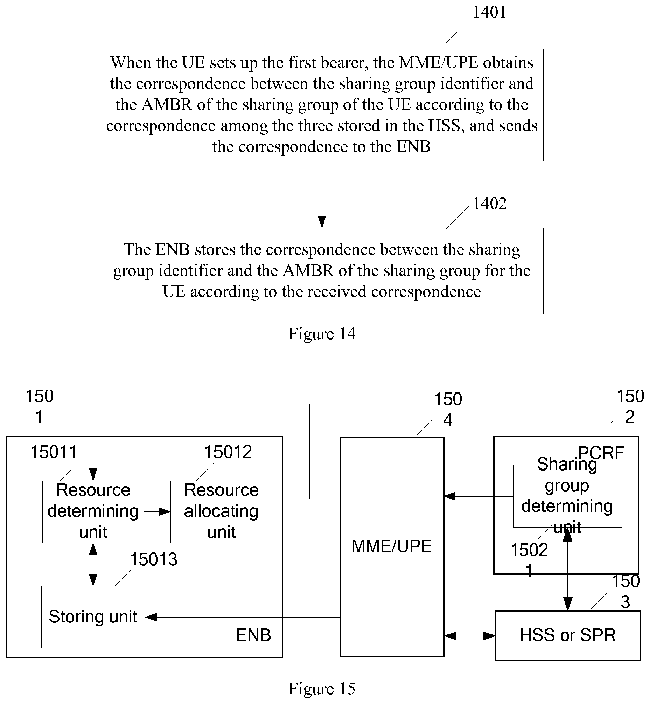

Figure 14 is a flowchart of storing the correspondence between the identifier of the sharing group and the AMBR according to the fifth embodiment of the present invention. The HSS stores the correspondence among the three for each UE. Accordingly, the process of storing the correspondence between the sharing group identifier and the AMBR on the ENB includes:
Step 1401: When the UE sets up a first bearer, the MME/UPE obtains the correspondence between the sharing group identifier and the AMBR of the sharing group from the correspondence among the three stored in the HSS of the UE, and sends to the ENB.
Step 1402: The ENB stores the correspondence between the sharing group identifier and the AMBR of the sharing group for the UE according to the received correspondence.

The process of sharing network resources in this embodiment of the present invention is the same as that in the fourth embodiment.

Figure 15 is a structural diagram of an apparatus according to the fifth embodiment of the present invention. The apparatus includes: a sharing group determining unit 15021, a resource determining unit 15011 and a resource allocating unit 15012. Connections among the preceding three units are the same as those shown in the structural diagram of the exemplary apparatus in the embodiments. But the sharing group determining unit is located in a PCRF 1502, while the resource determining unit 15011 and the resource allocating unit 15012 are located in an ENB 1501.

To establish the correspondence between the sharing group identifier and the AMBR on the ENB 1501, the apparatus further includes: an HSS 1503 or SPR 1503, adapted to store the correspondence among the three for each UE; and an MME/UPE 1504, adapted to obtain the correspondence of the UE between the sharing group identifier and the AMBR from the HSS and send the correspondence to the ENB 1501. The ENB 1501 further includes a storing unit 15013 which is adapted to store the correspondence between the sharing group identifier and the AMBR for the UE according to the received correspondence.

Accordingly, the sharing group determining unit 15021 in the PCRF 1502 obtains the corresponding sharing group identifier when determining the sharing group of the bearer according to the determined label and the correspondence among the three in the HSS 1503 or SPR 1503 after the functional unit of the PCRF 1502 determines the label corresponding to the current bearer, and sends the sharing group identifier to the ENB 1501. The resource determining unit 15011 in the ENB 1501 determines the AMBR according to the received sharing group identifier and the correspondence between the sharing group identifier and the AMBR stored in the storing unit 15013. The sharing group identifier determined by the sharing group determining unit 15021 is sent to the resource determining unit 15011 through the MME/UPE 1504.

In the fourth and fifth embodiments, the sharing group identifier and the label may be combined as one parameter. The combined parameter is produced by the PCRF and sent to the MME/UPE. The MME/UPE sends the parameter to the ENB through a bearer setup request message. The ENB resolves corresponding bytes of the received parameter and obtains the actual label value and sharing group identifier of the bearer, and determines the AMBR of the sharing group by checking the correspondence between the sharing group identifier and the AMBR.

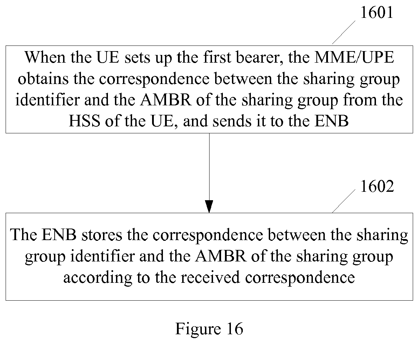

Figure 16 is a flowchart of establishing and storing the correspondence between the identifier of the sharing group and the AMBR according to the sixth embodiment of the present invention. The HSS stores the correspondence between the sharing group identifier and the AMBR for each UE. Accordingly, the process of storing the correspondence between the sharing group identifier and the AMBR on the ENB includes:
Step 1601: When the UE sets up a first bearer, the MME/UPE obtains the correspondence between the sharing group identifier and the AMBR of the sharing group and sends to the ENB.
Step 1602: The ENB stores the correspondence between the sharing group identifier and the AMBR of the sharing group according to the received correspondence.

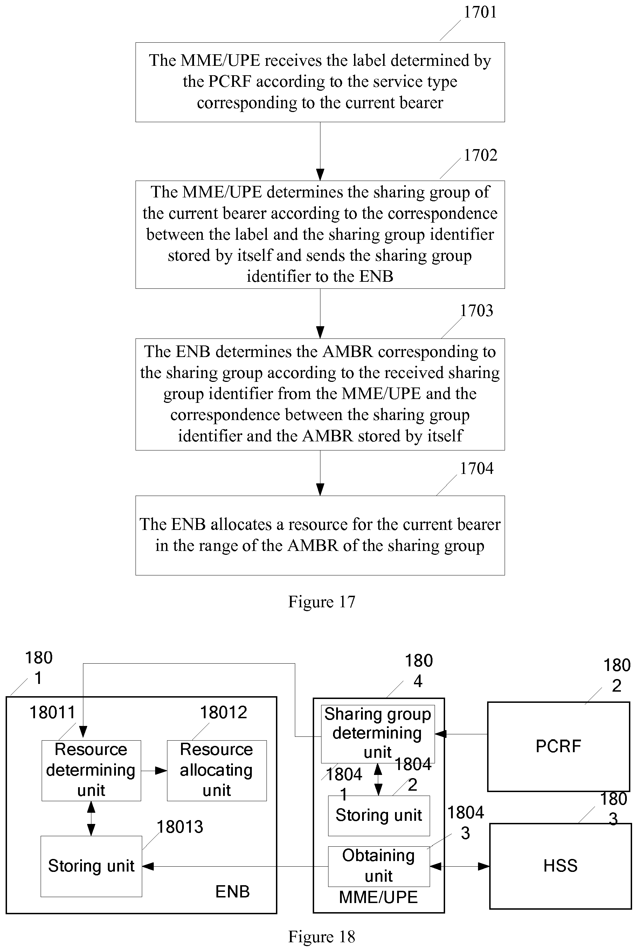

Figure 17 is a flowchart of a method according to the sixth embodiment of the present invention. The MME/UPE stores the correspondence between the label and the sharing group identifier. The detailed process is as follows:
Step 1701: The MME/UPE receives the label determined by the PCRF according to the service type corresponding to the current bearer during the bearer setup process.
Step 1702: The MME/UPE determines the sharing group of the current bearer according to the correspondence between the label and the sharing group identifier and sends the sharing group identifier to the ENB. In step 1702, a message unit, namely, a group ID, may be added to the resource allocation message that the MME/UPE sends to the ENB to send the sharing group ID, as in step 206 in Figure 2.
Step 1703: The ENB determines the AMBR corresponding to the sharing group according to the received sharing group identifier from the MME/UPE and the correspondence between the sharing group identifier and the AMBR.
Step 1704: The ENB allocates a network resource for the current bearer in the range of the AMBR of the sharing group.

Figure 18 is a structural diagram of an apparatus according to the sixth embodiment of the present invention. The apparatus includes: a sharing group determining unit 18041, a resource determining unit 18011 and a resource allocating unit 18012. Connections among the three units are the same as those of the exemplary apparatus. But the sharing group determining unit 18041 is located in an MME/UPE 1804, while the resource determining unit 18011 and the resource allocating unit 18012 are located in an ENB 1801.

To establish the correspondence between the sharing group identifier and the AMBR on the ENB 1801, the apparatus further includes an HSS 1803, adapted to store the correspondence between the sharing group identifier and the AMBR for each UE. The MME/UPE 1804 is further adapted to obtain the correspondence of the UE between the sharing group identifier and the AMBR from the HSS 1803 and send the correspondence to the storing unit 18013 of the ENB 1801. The ENB 1801 further includes a storing unit 18013 which is adapted to store the correspondence between the sharing group identifier and the AMBR for the UE according to the received correspondence.

Accordingly, the MME/UPE 1804 further includes a storing unit 18042, which is adapted to store the correspondence between the label and the sharing group identifier. The sharing group determining unit 18041 receives the label determined by the PCRF 1802 according to the service type corresponding to the current bearer, determines the sharing group of the current bearer according to the correspondence between the label and the sharing group identifier stored in the storing unit 18042, and sends the sharing group identifier to the ENB 1801. The ENB 1801 determines the AMBR according to the received sharing group identifier and the correspondence between the sharing group identifier and the AMBR stored by itself.

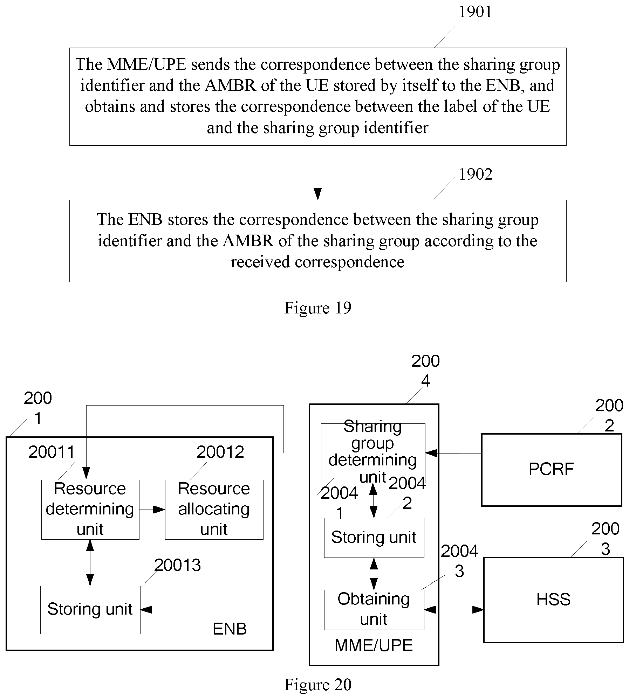

Figure 19 is a flowchart of storing the correspondence between the identifier of the sharing group and the AMBR according to the seventh example of the present invention. The HSS stores the correspondence among the three. Accordingly, the process of storing the correspondence between the sharing group identifier and the AMBR on the ENB includes:
Step 1901: When the UE sets up a first bearer, the MME/UPE sends the correspondence between the sharing group identifier and the AMBR of the sharing group of the UE to the ENB according to the correspondence among the three stored in the HSS. The MME/UPE, at the same time, obtains the correspondence between the label of the UE and the sharing group identifier from the HSS and stores the correspondence.

The method for the MME/UPE to send the correspondence between the sharing group identifier and the AMBR of the sharing group to the ENB and store the correspondence between the label of the UE and the sharing group identifier may be: the MME/UPE obtains the correspondence among the three of the UE through the HSS, sends the correspondence between the sharing group identifier and the AMBR of the sharing group to the ENB, and stores the correspondence between the label of the UE and the sharing group identifier.

Step 1902: The ENB establishes the correspondence between the sharing group identifier and the AMBR of the sharing group according to the received correspondence.

In this example, the method for sharing network resources is the same as that in the sixth example.

Figure 20 is a structural diagram of an apparatus according to the seventh example of the present invention. The structure of the apparatus in this example is the same as that in the sixth example on the whole. The connections among the resource determining unit 20011, resource allocating unit 20012 and sharing group determining unit 20041 are the same as those shown in Figure 18.

But the methods for establishing the correspondence between the sharing group identifier and the AMBR are different, and certain connections are thus different. Specifically, to establish the preceding correspondence, the HSS 2003 stores the correspondence among the three. The MME/UPE 2004 includes an obtaining unit 20043 and a storing unit 20042. The obtaining unit 20043 is adapted to obtain the correspondence between the sharing group identifier corresponding to the UE and the AMBR of the sharing group from the HSS 2003 when the UE sets up a first bearer, and send the correspondence to the ENB 2001. The obtaining unit 20043 further stores the correspondence between the label corresponding to the UE and the sharing group identifier to the storing unit 20042 in the MME/UPE 2004. The ENB 2001 further includes a storing unit 20013 which is adapted to store the correspondence between the sharing group identifier and the AMBR of the sharing group according to the received correspondence.

Accordingly, the sharing group determining unit 20041 of the MME/UPE 2004 receives the label determined by the PCRF 2002 according to the service type corresponding to the current bearer and the correspondence between the label and the sharing group identifier stored in the storing unit 20042, determines the sharing group of the current bearer, and sends the sharing group identifier to the resource determining unit 20011 in the ENB 2001. The resource determining unit 20011 determines the AMBR according to the received sharing group identifier and the correspondence between the sharing group identifier and the AMBR stored in the storing unit 20013.

The first technical scheme of the present invention has been described above. The preceding examples of the present invention provide a method for sharing network resources, in which the sharing group is set according to the service type and the maximum network resource of the sharing group is determined; the sharing group is determined according to the service type corresponding to the current bearer and the maximum network resource of the bearer is determined; and a resource is allocated for the bearer in the range of the maximum network resource of the sharing group. Examples and embodiments of the present invention also provide an apparatus for sharing network resources. The examples and embodiments provide a method for sharing the maximum network resource among multiple bearers in an evolved network, solving the problem of low network resource utilization that is caused by occupancy of fixed network resources by multiple bearers, and implementing maximum utilization of network resources.

The following describes the second technical scheme of the present invention.

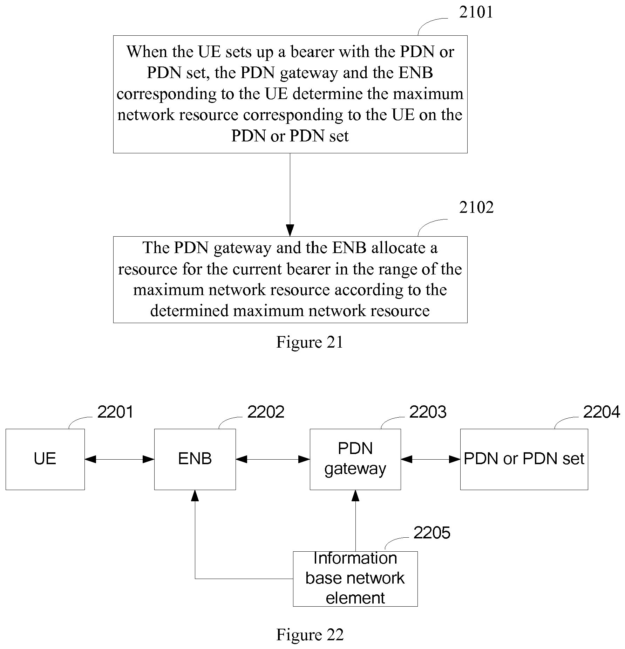

Figure 21 is an exemplary flowchart of a method according to the second technical scheme of the present invention. The method includes: setting a maximum network resource corresponding to a UE in a PDN or PDN set; when the UE sets up a bearer with the PDN or PDN set in step 2101, determining, by a PDN gateway and ENB that connect the UE and the PDN or PDN set, the maximum network resource corresponding to the UE on the PDN or PDN set. Step 2102: The PDN gateway and the ENB allocate a resource for the current bearer in the range of the maximum network resource according to the determined maximum network resource.

Figure 22 is a structural diagram of a system according to the second technical scheme of the present invention. The system includes at least: a UE 2201, an ENB 2202, a PDN gateway 2203, and a PDN or PDN set 2204. The PDN gateway 2203 obtains the preset maximum network resource corresponding to the UE 2201 on the current PDN or PDN set 2204 when the UE 2201 and the PDN or PDN set 2204 connected to the PDN gateway set up a bearer, and allocates a resource for the current bearer in the range of the maximum network resource. When the UE 2201 sets up a bearer, the ENB 2202 obtains the preset maximum network resource corresponding to the UE 2201 on the current PDN or PDN set 2204, and allocates a resource for the current bearer in the range of the maximum network resource.

The system further includes an information base network element 2205. The information base network element 2205 provides the maximum network resource set on the PDN or PDN set 2204 for the UE 2201. The PDN gateway 2203 and the ENB 2202 obtain the maximum network resource of the UE 2201 on the PDN or PDN set 2204 from the information base network element 2205.

The maximum network resource herein may be the same as that in the first technical scheme. The following describes the technical scheme in a scenario where the maximum network resource is an AMBR. When the maximum network resource is of any other type, the implementation method for the AMBR may be used. In addition, the PDN set in this scenario includes multiple PDNs with the same IP address. That is, all PDNs with the same IP address share the same PDN-AMBR. IP addresses may also be different, but PDNs that the same UE belongs to form a PDN set and share an AMBR. In examples of the present invention, the AMBR occupied by the UE on the PDN or PDN set is called a PDN-AMBR.

The technical scheme of the present invention does not limit which bearers apply to the PDN-AMBR. They may be all bearers of the UE on the PDN or PDN set, including GBR bearers and non-GBR bearers. They may also be partial bearers, for example, all GBR bearers, or all non-GBR bearers, or partial GBR bearers or partial non-GBR bearers, or a combination of partial GBR bearers and partial non-GBR bearers, or other possible combinations of bearers.

The exemplary flowchart describes a method for the PDN gateway and the ENB that connect the UE and the PDN or PDN set to determine the maximum network resource corresponding to the UE on the PDN or PDN set when the UE sets up a bearer with the PDN or PDN set. The method may be implemented in the following modes.

In the first mode, the PDN-AMBR corresponding to the UE on the PDN or PDN set is stored in the HSS or SPR as the subscription data. When the PDN-AMBR is stored in the HSS or SPR as the subscription data, it can be obtained from the HSS and sent to the PDN gateway and the ENB through the MME, or obtained from the SPR and sent to the PDN gateway and the ENB through the PCRF. If the PDN-AMBR contained in the user's subscription information changes, the HSS or SPR sends the updated PDN-AMBR to corresponding network entities, for example, the PDN gateway and the ENB.

In the second mode, the PDN-AMBR corresponding to the UE on the PDN or PDN set is stored in the PDN gateway as a part of a static Policy and Charging Control, PCC, rule on the PDN gateway. When the PDN is activated, the MME or PCRF sends the identifier of the static PCC rule to the PDN gateway. The PDN gateway activates the corresponding PDN-AMBR for control according to the PCC rule stored in the PDN gateway. When the PCRFR sends the identifier of the PCC rule, the PDN gateway sends the determined PDN-AMBR to the ENB, and the ENB stores it and allocates a resource accordingly.

In the third mode, the PDN-AMBR is configured as static configuration data on corresponding network entities, for example, the PDN gateway and the ENB. When the PDN gateway and the ENB find that the first bearer of the UE on a PDN or PDN set is activated, the PDN gateway and the ENB take the PDN-AMBR corresponding to the UE on the PDN or PDN set as the threshold for flow control.

The PCRF and the SPR are functional entities in the PCC architecture. The PCC implements the policy and charging control based on the subscription information and updates the binding mechanism. Through the PCC architecture, operators may associate services with bearers of the services and implement complete policy control and charging based on service data flows. In the PCC architecture, the PCRF is the core functional entity. The PCRF establishes the policy and charging rules and implements control on service bearers by executing these rules. To establish required rules accurately, the PCRF can obtain information related to services from the AF, information related to user subscription from the SPR, and information related to bearers from the gateway. The PCEF is the entity that executes the rules established by the PCRF. It usually is located at the service gateway of a bearer network. In the technical scheme of the present invention, the PCEF is located at the PDN gateway.

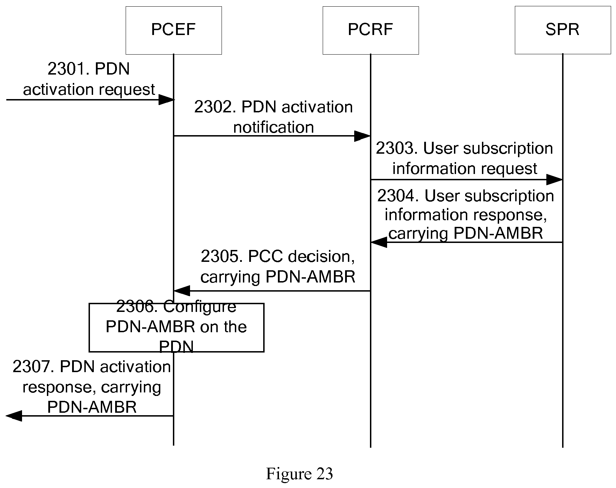

Figure 23 is an exemplary flowchart of a method based on the PCC architecture according to an embodiment of the present invention.

Step 2301: The PCEF receives a PDN activation request from the UE. The PDN activation request may be the first bearer setup request message for the PDN that the PDN gateway receives from the serving gateway, or other messages. The message also activates the setup of an IP Connectivity Access Network (IP-CAN) session of the PDN. The PCEF is located in the PDN gateway.

Step 2302: If the PCEF determines that the UE accesses the PDN for the first time, the PCEF sends a PDN activation notification to the PCRF. The PDN activation notification may be the policy and charging request message in the PCC or other messages. The message carries information related to the UE and the network. For example, the current PDN identifier is reported to the PCRF as the basis for decision making.

Step 2303: If the PCRF does not store the subscription information of the UE on the PDN, the PCRF requests the SPR for the subscription information. The request message contains information of the user identifier and the PDN identifier. If the PCRF stores the corresponding subscription information, the PCRF directly returns the subscription information.

Step 2304: The SPR returns the requested subscription information to the PCRF. The returned subscription information contains the PDN-AMBR information corresponding to the current PDN.

If the PCEF is configured with the corresponding PDN-AMBR information, the PCRF just activates the corresponding PCC decision on the PCEF, and the PDN-AMBR does not need to be transferred.

Step 2305: The PCRF makes decision on the policy and charging according to the obtained information and sends the obtained PCC rule to the PCEF through a corresponding PCC message. The message includes the PDN-AMBR information corresponding to the current PDN.

If the PCRF just activates the corresponding static PCC rule on the PCEF, a corresponding PCC rule identifier needs to be transferred. The PDN-AMBR information does not need to be transferred. In the technical scheme, the PDN-AMBR configured on the PCEF may also be activated by using other identifiers. Identifiers reflecting the PDN-AMBR such as the PCC rule identifiers are called sharing information.

Step 2306: The PCEF receives and executes the PCC rule. This step includes configuring the received PDN-AMBR on the PDN gateway and controlling the data flow of the UE on the PDN gateway. The corresponding PDN is activated, and the process ends. Furthermore, the IP-CAN session of the PDN is established.

If the PCEF receives only one PCC decision or PCC rule identifier, the PCEF obtains the corresponding PDN-AMBR from the static PCC decision or PCC rule.

Step 2307: The PCEF sends a response message to the network entity that sends the PDN activation request. The message may carry corresponding PDN-AMBR information.

In the preceding process, the PCEF is located at the PDN gateway. One PDN gateway can provide access to one or multiple PDNs. All PDNs can be activated through the preceding method for the PDN-AMBR. The preceding process is applicable to any IP-CAN based on the PCC architecture. The following describes the technical scheme in specific application scenarios with reference to the eighth, ninth and tenth embodiments.

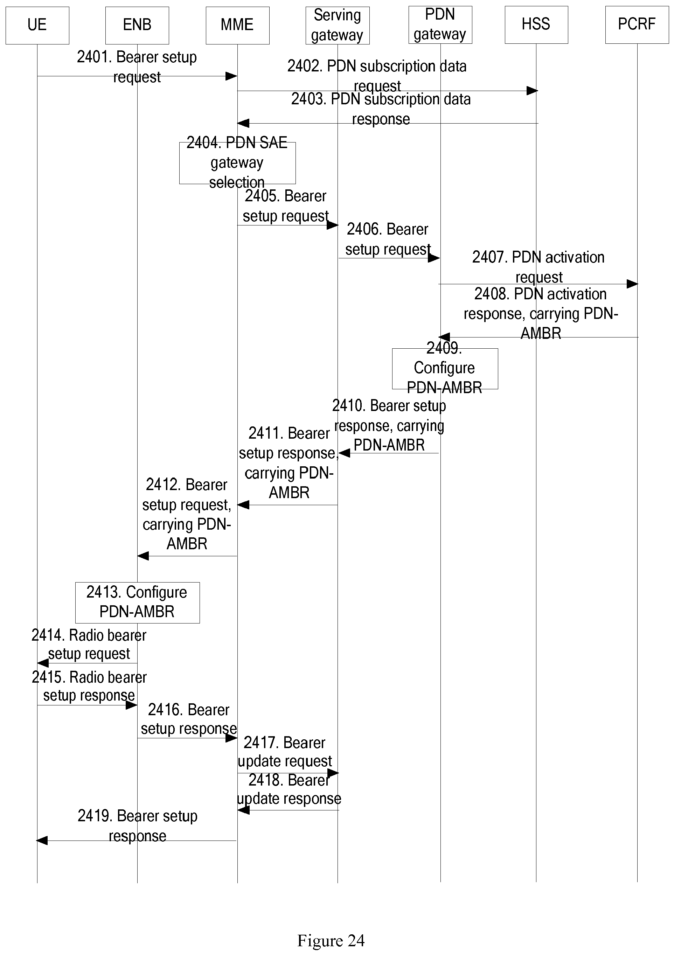

Figure 24 is a flowchart of a method according to the eighth embodiment of the present invention. In the process of the embodiment, the PDN gateway obtains the PDN-AMBR corresponding to the current bearer from the PCRF and sends it to the ENB. The process includes:
Step 2401: The UE sends a bearer setup request to the MME.
Step 2402: The MME sends a PDN subscription data request to the HSS.
Step 2403: The HSS returns a PDN subscription data response to the MME.
Step 2404: The MME selects the serving gateway and the PDN gateway.
Step 2405: The MME sends a bearer setup request to the corresponding serving gateway.
Step 2406: The serving gateway receives the bearer setup request sent by the MME and sends a bearer setup request to the PDN gateway selected by the MME.
Step 2407: The PDN gateway sends a PDN activation request to the PCRF.
Step 2408: The PCRF returns a PDN activation response to the PDN gateway. In the PCC architecture, the PCRF returns the PDN activation response to the PCEF in the PDN gateway. The response carries the PDN-AMBR.

The PCRF determines the PDN-AMBR corresponding to the current bearer established by the UE according to the UE related information in the received PDN activation request and information related to the PDN or PDN set when the PCRF stores the PDN-AMBR of the PDN or PDN set corresponding to the UE, and sends the PDN-AMBR to the PDN gateway. Or, the PCRF obtains the PDN-AMBR corresponding to the current bearer established by the UE from the SPR connected to the PCRF if the PCRF does not store the PDN-AMBR of the PDN or PDN set corresponding to the UE. The SPR, as the subscription profile repository of the UE under the PCC architecture, stores the PDN-AMBR of the UE when the PCRF does not store the PDN-AMBR of the UE. For details, refer to the process in Figure 23.

Step 2409: The PDN gateway configures the PDN-AMBR on the PDN gateway and allocates a resource for the current bearer in the range of the PDN-AMBR.

Step 2410: The PDN gateway sends the PDN-AMBR to the serving gateway through the bearer setup response message.

Step 2411: The serving gateway sends the PDN-AMBR to the MME through the bearer setup response message.

Step 2412: The MME sends the received PDN-AMBR to the ENB.

Step 2413: The ENB configures the received PDN-MBR information and allocates a resource for the current bearer in the range of the PDN-AMBR.

Step 2414: The ENB sends a radio bearer setup request to the UE.

Step 2415: The UE returns a radio bearer setup response to the ENB.

Step 2416: The ENB returns a bearer setup response to the MME.

Step 2417: The MME sends a bearer update request to the serving gateway.

Step 2418: The serving gateway returns a bearer update response to the MME.

Step 2419: The MME sends a bearer setup response to the UE.

Steps related to the bearer setup in the process may be standard steps.

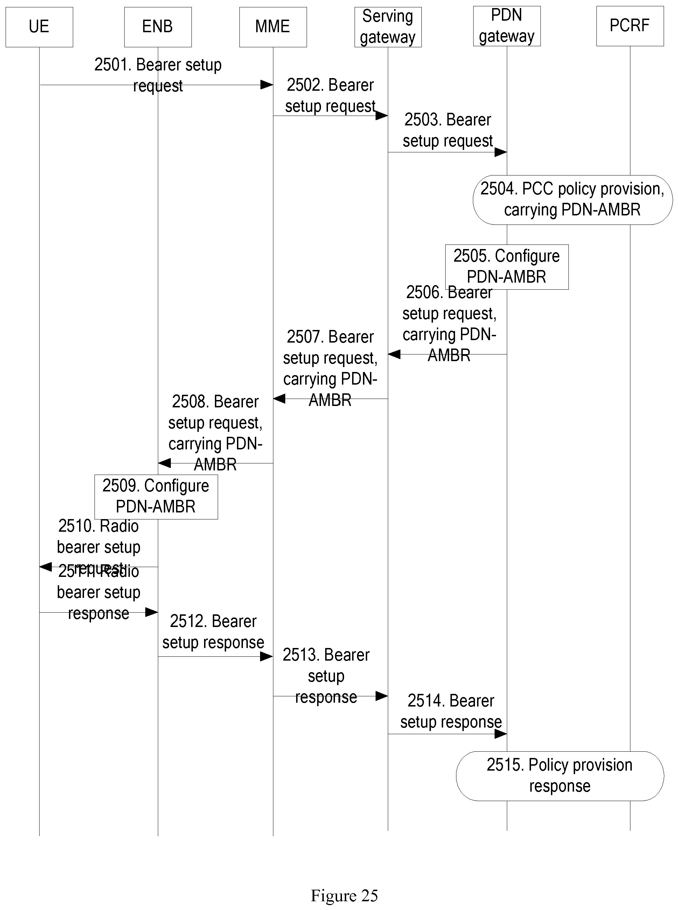

Figure 25 is a flowchart of a method according to the ninth embodiment of the present invention. In the process of the embodiment, the PDN gateway obtains the PDN-AMBR corresponding to the current bearer from the PCRF and sends it to the ENB. The process includes:
Steps 2501-2503: The UE sends a bearer setup request to the PDN gateway through the MME and the serving gateway.
Step 2504: The PDN gateway interacts with the PCRF. The PCRF provides a PCC policy for the PDN gateway, where the policy carries the PDN-AMBR. The PCRF may obtain the PDN-AMBR corresponding to the current bearer with reference to step 2408.

If the PCRF stores the corresponding PDN-AMBR, it sends the stored PDN-AMBR directly to the PDN gateway. If the PCRF does not store the corresponding PDN-AMBR, the PCRF interacts with the SPR and obtains the PDN-AMBR, and sends a PCC policy carrying the PDN-AMBR to the PDN gateway.

For the process in which the PCRF obtains the PDN-AMBR, refer to Figure 23.

Step 2505: The PDN gateway stores and configures the received PDN-AMBR and allocates a resource for the current bearer in the range of the PDN-AMBR.

Step 2506: The PDN gateway sends the bearer setup request carrying the PDN-AMBR to the serving gateway.

Step 2507: The serving gateway sends the bearer setup request carrying the PDN-AMBR to the MME.

Step 2508: The MME sends the bearer setup request to the ENB, and thus sends the PDN-AMBR to the ENB.

Step 2509: The ENB stores and configures the received PDN-AMBR and allocates a resource for the current bearer in the range of the PDN-AMBR.

Step 2510: The ENB sends a radio bearer setup request to the UE.

Step 2511: The UE returns a radio bearer setup response to the ENB.

Step 2512: The ENB sends a bearer setup response to the MME.

Step 2513: The MME sends the bearer setup response to the serving gateway.

Step 2514: The serving gateway sends the bearer setup response to the PDN gateway. Step 2515: The PDN gateway returns a policy provision response to the PCRF.

Steps 2510 to 2515 are dedicated bearer setup processes. Relevant processes can be referred to in the related art.

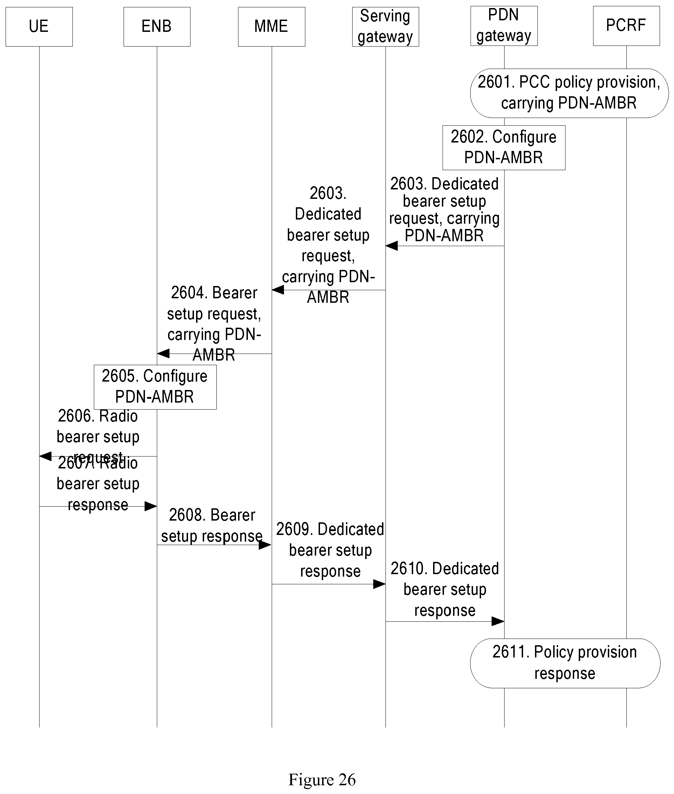

Figure 26 is a flowchart of a method according to the tenth embodiment of the present invention. In the process of the embodiment, the PDN gateway obtains the PDN-AMBR corresponding to the current bearer from the PCRF and sends it to the ENB. The process includes:
Step 2601: The PCRF interacts with the PDN gateway and provides a PCC policy for the PDN gateway connecting the UE and the PDN or PDN set according to the PDN or PDN set corresponding to the bearer to be established by the UE. The PCC policy carries the PDN-AMBR. The PCRF may obtain the PDN-AMBR corresponding to the current bearer with reference to step 2408.

If the PCRF stores the corresponding PDN-AMBR, it sends the stored PDN-AMBR directly to the PDN gateway. If the PCRF does not store the corresponding PDN-AMBR, the PCRF interacts with the SPR and obtains the PDN-AMBR, and sends a PCC policy carrying the PDN-AMBR to the PDN gateway.

Steps 2602 to 2611 are the same as steps 2505 to 2515.

When the first bearer of a PDN or PDN set is activated, the PDN-AMBR is applied in the data flow control for the subsequent bearers. The control includes:
1. identifying whether the new bearer is in the control range of a certain PDN-AMBR;
2. allocating a bandwidth resource for the new bearer according to the PA|DN-AMBR value and the flow of existing bearers; and
3. controlling the flow rate of all bearers in the control range according to the PDN-AMBR. Identifying whether the new bearer is in the control range of a certain PDN-AMBR is to configure a corresponding PDN-AMBR for non-first bearers. There are two implementation solutions.

The first solution is: The sharing identifier information of any bearer established by the UE on the PDN or PDN set is obtained according to the PDN corresponding to the bearer established by the UE. The PDN gateway and the ENB determine the PDN-AMBR of the new bearer according to the sharing identifier information, and allocate resources for the new bearer and other bearers in the range of the maximum network resource. The sharing identifier information may be the bearer identifier of any bearer established on the PDN or PDN set corresponding to the bearer, for example, the linked EPS bearer ID, or be a PDN network identifier, for example, an access point name, or be any other identifier that can identify which PDN the bearer belongs to. The PDN gateway and the ENB determine the control range of the PDN-AMBR that the bearer belongs to according to the received identifiers of established bearers or other identifiers that can identify which PDN or PDN set the bearer belongs to, and allocate corresponding PDN-AMBR resources.

The second solution is: The sharing identifier information is set according to the maximum network resource corresponding to the UE when the UE sets up the first bearer, and sent to the PDN gateway and the ENB. The PDN gateway and the ENB establish the correspondence between the sharing identifier information and the maximum network resource of the UE. The PDN gateway and the ENB determine the maximum network resource corresponding to the UE according to the established correspondence between the sharing identifier information and the maximum network resource of the UE and the received sharing identifier information, and allocate resources for the new bearer and other established bearers in the range of the maximum network resource. Specifically, a mapping table can be set on the node that uses the PDN-AMBR for flow control, including PDN-AMBR sharing identifier and corresponding PDN-AMBR values. In the setup of subsequent bearers, the sharing identifier may be carried in the bearer setup requests to notify the node of corresponding PDN-AMBR values.

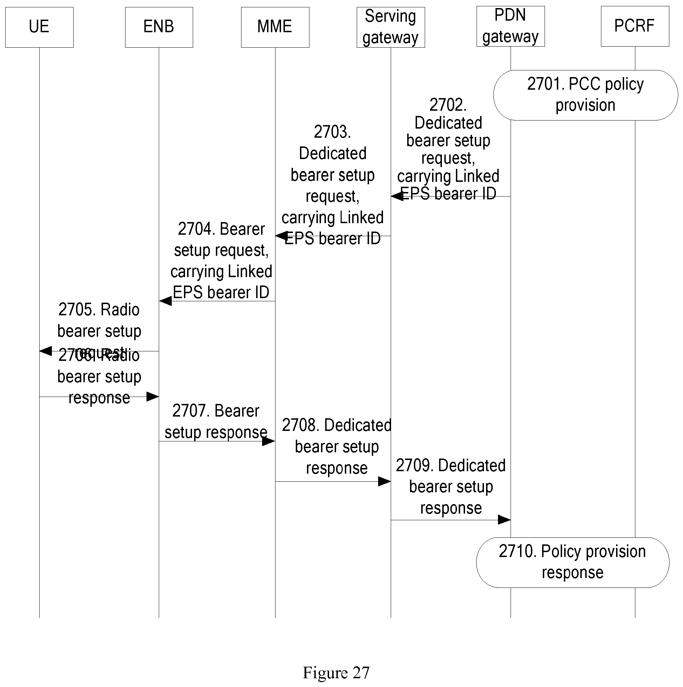

Figure 27 is a flowchart of setting up a non-first bearer according to an embodiment of the present invention.

Step 2701: The PCRF interacts with the PDN gateway and provides a PCC policy for the PDN gateway connecting the UE and the PDN or PDN set according to the PDN or PDN set corresponding to the bearer to be established.

Step 2702: The PDN gateway determines the PDN-AMBR corresponding to the UE on the PDN or PDN set according to the policy provided by the PCRF, and allocates resources for the bearers of the UE on the PDN or PDN set, including the current bearer and other established bearers. The PDN gateway sends a dedicated bearer setup request to the serving gateway, in which the linked EPS bearer ID of an established bearer in the range of the current PDN-AMBR is carried. This process takes the linked EPS bearer ID as an example. When the sharing identifier information is other contents, this process may also be applied.

Step 2703: The serving gateway sends the dedicated bearer setup request carrying the linked EPS bearer ID to the MME.

Step 2704: The MME sends the bearer setup request carrying the linked EPS bearer ID to the ENB.

Step 2705: The ENB finds the PDN-AMBR corresponding to the current bearer according to the received linked EPS bearer ID, allocates resources for the bearers, including the current bearer and other established bearers, of the UE on the PDN or PDN set, and sends a radio bearer setup request to the UE.

Steps 2706 to 2710 are similar to steps 2511 to 2515.

The process shown in Figure 27 is applicable to the eighth, ninth and tenth embodiments based on the PCC architecture.

The processes of the eighth, ninth and tenth embodiments based on the PCC architecture are applicable to scenarios where corresponding PDNs are configured with PCC in an Evolved Packet system (EPS). If the PCC is not configured, the configuration of PDN-AMBR depends on implementations of IP-CANs.

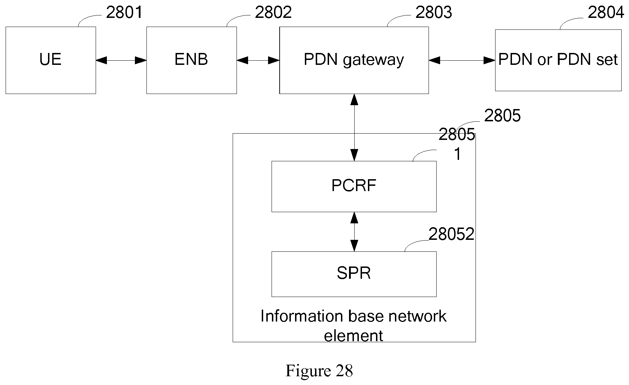

Figure 28 is a structural diagram of a system according to the second technical scheme of the present invention. The system is the same as that shown in Figure 22, including: a UE 2801, an ENB 2802, a PDN gateway 2803, a PDN or PDN set 2804, and an information base network element 2805. In the structural diagram, the ENB 2802 obtains the maximum network resource through the PDN gateway 2803. The information base network element 2805 includes a PCRF 28051 and an SPR 28052. If the PCRF 28051 stores sharing information reflecting the maximum network resource, the PCRF 28051 sends the sharing information reflecting the maximum network resource corresponding to the UE 2801 on the PDN or PDN set 2804 to the PDN gateway 2803. If the PCRF 28051 does not store the maximum network resources, but the SPR 28052 stores the sharing information reflecting the maximum network resources, the PCRF 28051 obtains the sharing information reflecting the maximum network resource corresponding to the UE 2801 on the PDN or PDN set 2804 from the SPR 28052, and sends the information to the PDN gateway 2803. The PDN gateway 2803 and the ENB 2802 may determine the maximum network resource with reference to the methods shown in Figure 23 to Figure 27.

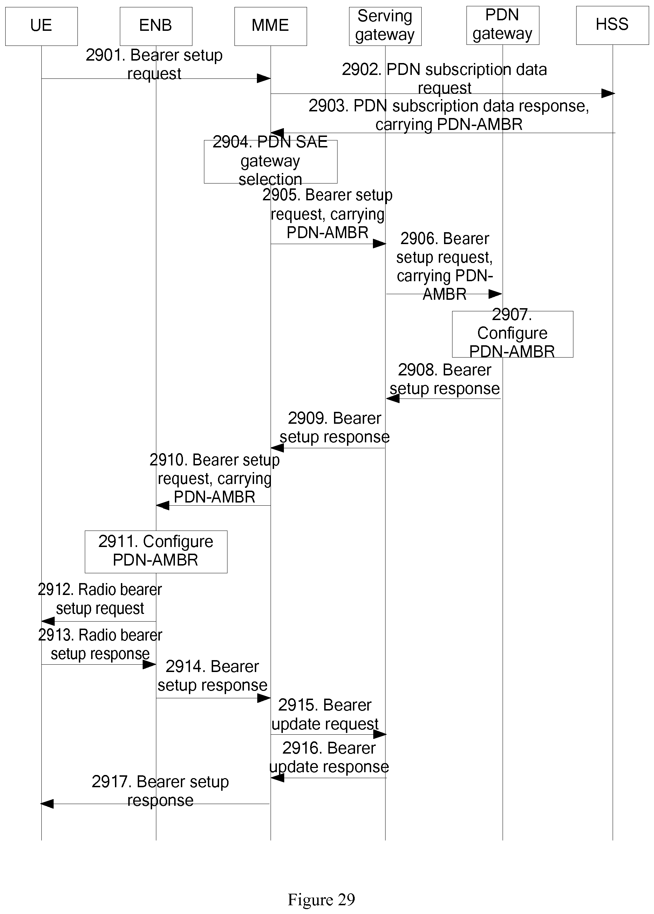

Figure 29 is a flowchart of a method according to the eleventh embodiment of the present invention.

Step 2901: The UE sends a bearer setup request to the MME.

Step 2902: The MME sends a PDN subscription data request to the HSS.

Step 3903: The HSS returns a PDN subscription data response to the MME. The response carries the PDN-AMBR of the PDN corresponding to the bearer to be established by the UE. The HSS pre-stores the PDN-AMBR of each PDN or PDN set corresponding to the UE, and determines the corresponding PDN-AMBR according to the PDN or PDN set corresponding to the current bearer.

Step 2904: The MME selects the serving gateway and the PDN gateway.

Step 2905: The MME sends the bearer setup request carrying the PDN-AMBR to the serving gateway.

Step 2906: The serving gateway sends the bearer setup request carrying the PDN-AMBR to the PDN gateway.

Step 2907: The PDN gateway configures the received PDN-MBR and allocates a resource for the current bearer in the range of the PDN-AMBR.

Step 2908: The PDN gateway sends a bearer setup response to the serving gateway.

Step 2909: The serving gateway returns a bearer setup response to the MME.

Step 2910: The MME sends the bearer setup request carrying the PDN-AMBR to the ENB.

Step 2911: The ENB configures the received PDN-AMBR and allocates a resource for the current bearer in the range of the PDN-AMBR.

Step 2912: The ENB sends a radio bearer setup request to the UE.

Step 2913: The UE returns a radio bearer setup response to the ENB.

Step 2914: The ENB returns a bearer setup response to the MME.

Step 2915: The MME sends a bearer update request to the serving gateway.

Step 2916: The serving gateway returns a bearer update response to the MME.

Step 2917: The MME sends a bearer setup response to the UE.

The method for the MME to obtain the PDN-AMBR from the HSS in this embodiment may be implemented in another way. When the UE sets up a bearer through the MME for the first time or performs network registration, the MME obtains and stores the PDN-AMBR corresponding to the UE on each PDN or PDN set, and sends the PDN-AMBR of the current bearer to the PDN gateway and the ENB. When the UE sets up bearers through the MME with other PDNs or PDN sets, the MME can directly select the PDN-AMBR on the PDN or PDN set corresponding to the current bearer from the PDN-AMBRs corresponding to the UE stored in the MME, and send the PDN-AMBR to the PDN gateway and the ENB.

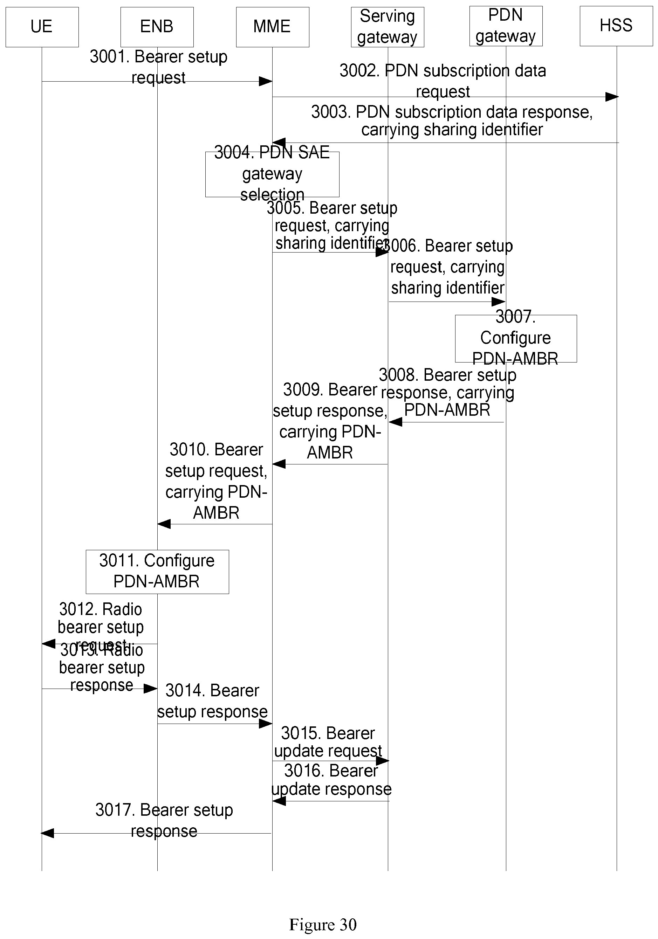

Figure 30 is a flowchart of a method according to the twelfth embodiment of the invention. Figure 30 shows a non-PCC architecture and a method for obtaining the sharing identifier corresponding to the PDN-AMBR from the HSS in a first bearer setup process. In the embodiment, the PDN gateway stores the PDN-AMBR corresponding to the UE on each PDN or PDN set and the sharing identifier of the PDN-AMBR. The HSS stores the sharing identifier corresponding to the UE on each PDN or PDN set. The specific process of this embodiment is as follows:
Step 3001: The UE sends a bearer setup request to the MME.
Step 3002: The MME sends a PDN subscription data request to the HSS.
Step 3903: The HSS returns a PDN subscription data response to the MME. The response carries the sharing identifier of the PDN-AMBR of the PDN corresponding to the bearer to be established by the UE. The HSS determines the sharing identifier according to the PDN or PDN set corresponding to the bearer to be established by the UE.
Step 3004: The MME selects the serving gateway and the PDN gateway.
Step 3005: The MME sends the bearer setup request carrying the sharing identifier to the serving gateway.
Step 3006: The serving gateway sends the bearer setup request carrying the sharing identifier to the PDN gateway.
Step 3007: The PDN gateway determines the PDN-AMBR corresponding to the current bearer according to the stored correspondence between the PDN-AMBR and the sharing identifier, configures the PDN-AMBR, and allocates a source for the bearer in the range of the PDN-AMBR.
Step 3008: The PDN gateway returns a bearer setup response carrying the PDN-AMBR to the serving gateway.
Step 3009: The serving gateway returns the bearer setup response carrying the PDN-AMBR to the MME.
Step 3010: The MME sends the bearer setup request carrying the PDN-AMBR to the ENB.
Step 3011: The ENB configures the received PDN-AMBR and allocates a resource for the current bearer in the range of the PDN-AMBR.
Step 3012: The ENB sends a radio bearer setup request to the UE.
Step 3013: The UE returns a radio bearer setup response to the ENB.
Step 3014: The ENB returns a bearer setup response to the MME.
Step 3015: The MME sends a bearer update request to the serving gateway.
Step 3016: The serving gateway returns a bearer update response to the MME.
Step 3017: The MME sends a bearer setup response to the UE.

The processes shown in Figure 29 and Figure 30 are also applicable to the bearer setup process based on the PCC architecture.

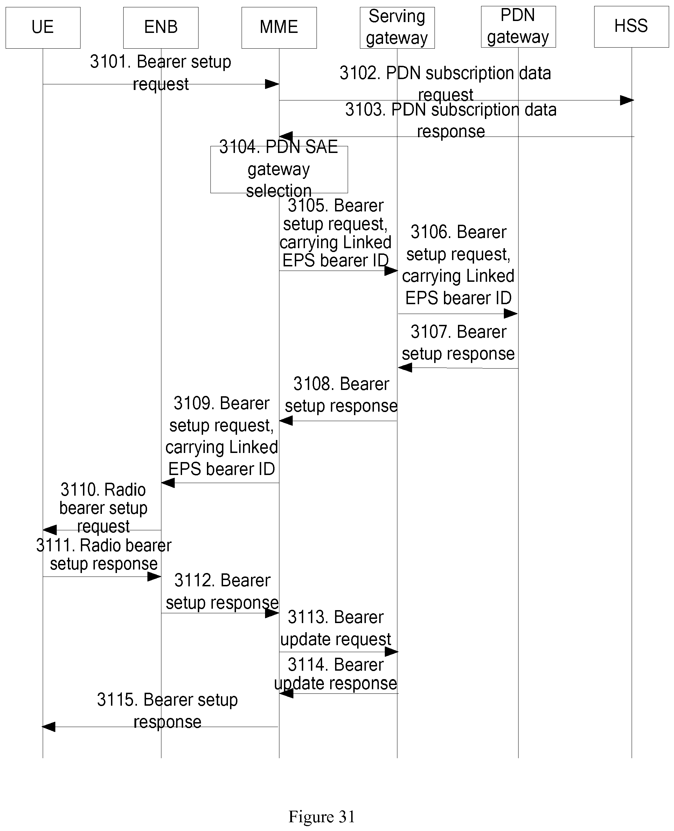

Figure 31 is another flowchart of setting up a non-first bearer according to an embodiment of the present invention.

Step 3101: The UE sends a bearer setup request to the MME.

Step 3102: The MME sends a PDN subscription data request to the HSS.

Step 3103: The HSS returns a PDN subscription data response to the MME.

Step 3104: The MME selects the serving gateway and the PDN gateway.

Step 3105: The MME sends the bearer setup request carrying the linked EPS bearer ID to the serving gateway. This process takes the linked EPS bearer identifier as an example. When the sharing identifier information is other contents, this process may also be applied. The method for determining the sharing identifier information in this process is the same as that shown in Figure 27.

Step 3106: The serving gateway sends the bearer setup request carrying the linked EPS bearer ID to the PDN gateway.

Step 3107: The PDN gateway finds the PDN-AMBR corresponding to the current bearer according to the received linked EPS bearer ID, allocates resources for the bearers, including the current bearer and other established bearers, of the UE on the PDN or PDN set, and sends a radio bearer setup response to the serving gateway.

Step 3108: The serving gateway returns a bearer setup response to the MME.

Step 3109: The MME sends the bearer setup request carrying the linked EPS bearer identifier to the ENB.

Step 3110: The ENB finds the PDN-AMBR corresponding to the current bearer according to the received linked EPS bearer ID, allocates resources for the bearers, including the current bearer and other established bearers, of the UE on the PDN or PDN set, and sends a radio bearer setup request to the UE.

Steps 3111 to 3115 are the same as steps 2912 to 2917.

Figure 24 to Figure 31 describe the processes in which the PCRF or MME directly obtains the PDN-AMBR, that is, the first method for the PDN gateway and the ENB to determine the PDN-AMBR. The second method and third method for the PDN gateway and the ENB to determine the PDN-AMBR are also applicable to the preceding processes. In the second method, the PCRF, HSS or MME sends the sharing information reflecting the PDN-AMBR instead of the PDN-AMBR. In the third method, the PCRF, HSS or MME does not transfer information related to the PDN-AMBR, but determines the PDN-AMBR corresponding to the current bearer according to the PDN-AMBR corresponding to the UE stored in the PDN gateway and the ENB and the information of the PDN or PDN set corresponding to the UE and the current bearer carried in the received messages.

In the second technical scheme of the present invention, the PDN-AMBR on the PDN gateway and the ENB may be configured with uplink and downlink values. Or the PDN-AMBR on the PDN gateway is configured with a downlink value, and the PDN-AMBR on the ENB is configured with both downlink and uplink values. Or the PDN-AMBR on the PDN gateway is configured with a downlink value, and the PDN-AMBR on the ENB is configured with an uplink value. Or other combinations of PDN-AMBR uplink and downlink values are configured on the PDN gateway and the ENB.

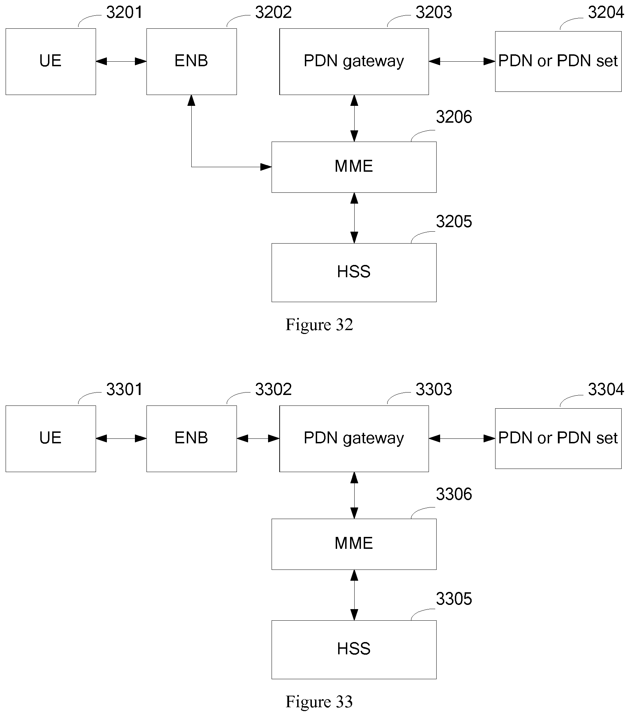

Figure 32 is a structural diagram of another system according to the second technical scheme of the present invention. The system is the same as that shown in Figure 22, including: a UE 3201, an ENB 3202, a PDN gateway 3203, a PDN or PDN set 3204, and an information base network element. The information base network element in this system is an HSS 3205. The system further includes an MME 3206. In the system, the MME 3206 obtains the PDN-AMBR corresponding to the current PDN or PDN set from the HSS 3205, and sends the PDN-AMBR to the PDN gateway 3203 and the ENB 3202. The PDN gateway 3203 and the ENB 3202 may determine the maximum network resource with reference to the method shown in Figure 29.

Figure 33 is a structural diagram of another system according to the second technical scheme of the present invention. The system is the same as that shown in Figure 22, including: a UE 3301, an ENB 3302, a PDN gateway 3303, a PDN or PDN set 3304, and an information base network element. The information base network element in this system is an HSS 3305. Accordingly, the system further includes an MME 3306. The MME 3306 obtains the sharing identifier of the PDN-AMBR corresponding to the current PDN or PDN set from the HSS 3305, and sends the sharing identifier to the PDN gateway 3303. The PDN gateway 3303 obtains the PDN-AMBR corresponding to the received sharing identifier according to the correspondence between the stored PDN-AMBR and the sharing identifier, and sends the PDN-AMBR to the ENB 3302. Thus both the PDN gateway 3303 and the ENB 3302 obtain the PDN-AMBR corresponding to the current bearer. The PDN gateway 3303 and the ENB 3302 may determine the maximum network resource with reference to the method shown in Figure 30.

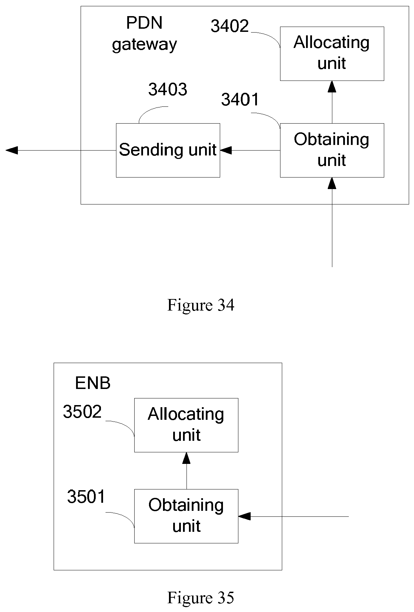

In addition, the internal structure of the PDN gateway in Figure 22, Figure 28, Figure 32, and Figure 33 may be the same as that shown in Figure 34. As shown in Figure 34, the PDN gateway includes at least: an obtaining unit 3401 and an allocating unit 3402. When the UE and the PDN or PDN set connected to the PDN gateway set up a bearer, the obtaining unit 3401 obtains the preset maximum network resource corresponding to the UE on the current PDN or PDN set, and sends the maximum network resource to the allocating unit 3402. The allocating unit 3402 receives the maximum network resource and allocates a resource for the current bearer in the range of the maximum network resource. Compared with the eighth, ninth and tenth embodiments, the PDN gateway further includes a sending unit 3403. The obtaining unit 3401 sends the obtained maximum network resource to the sending unit 3403. The sending unit 3403 sends the maximum network resource to the ENB corresponding to the UE.

In addition, the internal structure of the ENB in Figure 22, Figure 28, Figure 32, and Figure 33 may be the same as that shown in Figure 35. As shown in Figure 35, the ENB includes at least: an obtaining unit 3501 and an allocating unit 3502. When the UE connected to the ENB sets up a bearer, the obtaining unit 3501 obtains the preset maximum network resource corresponding to the UE on the PDN or PDN set, and sends the maximum network resource to the allocating unit 3502. The allocating unit 3502 receives the maximum network resource and allocates a resource for the current bearer in the range of the maximum network resource.

The second technical scheme of the present invention has been described above. The method for sharing network resources provided by embodiments of the present invention includes: setting the maximum network resource corresponding to the UE on the PDN or PDN set; when the UE sets up a bearer with the PDN or PDN set, allocating, by the PDN gateway connecting the UE and the PDN or PDN set and by the ENB corresponding to the UE, a resource for the current bearer in the range of the maximum network resource, thus sharing the maximum network resource among multiple bearers. The second technical scheme of the present invention also provides a system, an ENB and a PDN gateway for sharing network resources. Embodiments of the present invention implement sharing of a maximum transmission rate among multiple bearers in the evolved network, solve the problem of low network resource utilization caused by the fact that each bearer occupies a fixed bandwidth resource, and implement maximum utilization of network resources.

Although the present invention has been described through some exemplary embodiments, the invention is not limited to such embodiments. It is apparent that those skilled in the art can make various modifications and variations to the invention without departing from the scope of the invention. The invention is intended to cover the modifications and variations provided that they fall in the scope of protection defined by the following claims or their equivalents.

## Claims

1. A method for sharing network resources, comprising:
determining, a maximum network resource corresponding to a User Equipment, UE, on a Packet Data Network, PDN, or a PDN set, when the UE sets up a bearer with the PDN or the PDN set; and
allocating, by a PDN gateway connecting the UE and the PDN or the PDN set, a resource for the bearer in the range of the maximum network resource according to the determined maximum network resource;
wherein the determining step comprises:
receiving, by the PDN gateway, a sharing information of the maximum network resource corresponding to the UE on a current PDN or PDN set from a Mobility Management Entity, MME, wherein the sharing information is obtained by the MME from a Home Subscriber Server, HSS, corresponding to the UE;
determining, by the PDN gateway, the maximum network resource according to the received sharing information.

2. The method of claim 1 wherein the allocating step comprises:
configuring, by the PDN gateway, the received maximum network resource; and
allocating, by the PDN gateway, a resource for the bearer in the range of the configured maximum network resource.

3. The method of claim 1 wherein: the sharing information is the maximum network resource; or
the sharing information is a sharing identifier of the maximum network resource, the method further comprises: storing, by the PDN gateway, the correspondence between the maximum network resource and the sharing information; and determining, by the PDN gateway, the maximum network resource corresponding to the sharing information according to the stored correspondence.

4. The method of claim 3, wherein the maximum network resource is an Aggregate Maximum Bit Rate, AMBR, or a Maximum Bit Rate, MBR, or a Guaranteed Bit Rate, GBR.

## Patentansprüche

1. Verfahren zum Teilen von Netzwerkressourcen, umfassend:
Bestimmen einer maximalen Netzwerkressource, die einem Benutzergerät ("User Equipment"), UE, entspricht, in einem Paketdatennetzwerk, PDN, oder einem PDN-Satz, wenn das UE einen Träger mit dem PDN oder dem PDN-Satz aufbaut; und
Zuteilen, durch einen PDN-Netzübergang, der das UE und das PDN oder den PDN-Satz verbindet, einer Ressource für den Träger im Bereich der maximalen Netzwerkressource gemäß der bestimmten maximalen Netzwerkressource;
wobei der Schritt des Bestimmens umfasst:
Empfangen, durch den PDN-Netzübergang, einer Teilungsinformation der maximalen Netzwerkressource, die dem UE entspricht, in einem aktuellen PDN oder PDN-Satz von einer Mobilitätsmanagement-Entität, MME, wobei die Teilungsinformation durch die MME von einem Heimteilnehmerserver ("Home Subscriber Server"), HSS, der dem UE entspricht;
Bestimmen, durch den PDN-Netzübergang, der maximalen Netzwerkressource gemäß der empfangenen Teilungsinformation.

2. Verfahren nach Anspruch 1, wobei der Zuteilungsschritt umfasst:
Konfigurieren, durch den PDN-Netzübergang, der empfangenen maximalen Netzwerkressource; und
Zuteilen, durch den PDN-Netzübergang, einer Ressource für den Träger im Bereich der konfigurierten maximalen Netzwerkressource.

3. Verfahren nach Anspruch 1, wobei: die Teilungsinformation die maximale Netzwerkressource ist; oder
die Teilungsinformation eine Teilungskennung der maximalen Netzwerkressource ist, wobei das Verfahren ferner umfasst: Speichern, durch den PDN-Netzübergang, der Entsprechung zwischen der maximalen Netzwerkressource und der Teilungsinformation; und Bestimmen, durch den PDN-Netzübergang, der maximalen Netzwerkressource, die der Teilungsinformation entspricht, anhand der gespeicherten Entsprechung.

4. Verfahren nach Anspruch 3, wobei die maximale Netzwerkressource eine aggregierte maximale Bitrate, AMBR, oder eine maximale Bitrate, MBR, oder eine garantierte Bitrate, GBR, ist.

## Revendications

1. Procédé de partage de ressources réseau, comprenant :
la détermination d'une ressource maximale de réseau correspondant à un équipement utilisateur, UE, sur un réseau de données en paquets, PDN, ou un ensemble PDN, lorsque l'équipement utilisateur UE établit un support avec le réseau PDN ou l'ensemble PDN, et
l'allocation, par une passerelle de réseau PDN reliant l'équipement utilisateur UE et le réseau PDN, d'une ressource pour le support dans la plage de la ressource maximale de réseau en fonction de la ressource maximale de réseau déterminée,
l'étape de détermination comprenant :
la réception, par la passerelle de réseau PDN, d'une information de partage de la ressource maximale de réseau correspondant à l'équipement utilisateur UE sur un réseau PDN ou ensemble PDN en cours en provenance d'une entité de gestion de mobilité, MME, l'information de partage étant obtenue par l'entité MME en provenance d'un serveur d'abonnés domestiques, HSS, correspondant à l'équipement utilisateur UE,
la détermination, par la passerelle de réseau PDN, de la ressource maximale de réseau en fonction de l'information de partage reçue.

2. Procédé selon la revendication 1, dans lequel l'étape d'allocation comprend :
la configuration, par la passerelle de réseau PDN, de la ressource maximale de réseau reçue, et
l'allocation, par la passerelle de réseau PDN, d'une ressource pour le support dans la plage de la ressource maximale de réseau configurée.

3. Procédé selon la revendication 1, dans lequel l'information de partage est la ressource maximale de réseau, ou
l'information de partage est un identificateur de partage de la ressource maximale de réseau, le procédé comprenant en outre : la mémorisation, par la passerelle de réseau PDN, de la correspondance entre la ressource maximale de réseau et l'information de partage, ainsi que la détermination, par la passerelle de réseau PDN, de la ressource maximale de réseau correspondant à l'information de partage en fonction de la correspondance mémorisée.

4. Procédé selon la revendication 3, dans lequel la ressource maximale de réseau est un débit binaire maximal agrégé, AMBR, ou un débit binaire maximal, MBR, ou un débit binaire garanti, GBR.
